(19) Europäisches Patentamt
European Patent Office
Office européen des brevets

(11) Publication number: **0 340 262 B1**

# (12) EUROPEAN PATENT SPECIFICATION

(45) Date of publication of patent specification: **29.06.94**

(51) Int. Cl.$^5$: **B01D 53/22**

(21) Application number: **88908835.7**

(22) Date of filing: **14.09.88**

(86) International application number:
**PCT/US88/03164**

(87) International publication number:
**WO 89/04206 (18.05.89 89/11)**

The file contains technical information submitted after the application was filed and not included in this specification

## (54) SEMI-PERMEABLE MEMBRANES WITH AN INTERNAL DISCRIMINATING REGION.

(30) Priority: **06.11.87 US 118119**
**06.11.87 US 118141**
**07.12.87 US 129273**

(43) Date of publication of application:
**08.11.89 Bulletin 89/45**

(45) Publication of the grant of the patent:
**29.06.94 Bulletin 94/26**

(84) Designated Contracting States:
**AT BE CH DE FR GB IT LI NL SE**

(56) References cited:
**DE-C- 3 740 871**
**IS-A- 3 830 733**
**US-A- 3 852 388**
**US-A- 4 209 307**
**US-A- 4 568 579**
**US-A- 4 728 346**
**GB-A- 2 199 786**
**US-A- 3 244 763**
**US-A- 4 051 300**
**US-A- 4 286 015**
**US-A- 4 612 119**

(73) Proprietor: **THE DOW CHEMICAL COMPANY**
**2030 Dow Center,**
**Abbott Road**
**Midland, MI 48640(US)**

(72) Inventor: **SANDERS, Edgar, S., Jr.**
**3939 Highgate Way**
**Pittsburg, CA 94565(US)**
Inventor: **JENSVOLD, John, A.**
**820 Dorset Way**
**Benicia, CA 94510(US)**
Inventor: **CLARK, Daniel, O.**
**909 Rose Drive**
**Benicia, CA 94510(US)**
Inventor: **BECK, Henry, N.**
**390 LaVista Road**
**Walnut Creek, CA 94598(US)**
Inventor: **LIPSCOMB, Glenn, G., II**
**575 Pimlico Court**
**Walnut Creek, CA 94596(US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

PATENT ABSTRACTS OF JAPAN, vol. 4, no. 190 (C-37)[672], 26th December 1980; & JP-A-55 129 109

Techniques of Chemistry, Volume VII : Membranes in Separations (1984), pages 55-57.

Membrane Separation Systems, Recent Developments and Future Directions, pages 189-190

Inventor: COAN, Frederick, L.
1564 Kingsly Drive
Pittsburg, CA 94565(US)

(74) Representative: Casalonga, Axel
BUREAU D.A. CASALONGA - JOSSE
Morassistrasse 8
D-80469 München (DE)

## Description

This invention relates to novel semi-permeable membranes useful for separating one or more gases from one or more other gases and to a process for preparing such membranes.

In various industries, it is necessary or highly desirable to separate one component from another in a gaseous stream. Processes used to perform such separations include pressure swing absorption, cryogenics, and membrane separations. In a membrane separation, a gaseous stream containing the components to be separated is contacted with a membrane, wherein the membrane separates two regions in a manner such that only those materials which permeate through the membrane can communicate from one region to the other. Such membranes are semi-permeable, in that one or more components of the gaseous mixture selectively permeates through the membrane at a rate much higher than one or more of the components in the gaseous stream. Among such separations are the separation of oxygen from nitrogen, and carbon dioxide from methane. The gaseous mixture is contacted with the membrane in a manner such that the selectively permeable species is preferentially transported through the membrane to the other region. The component which is non-selectively permeable may permeate through the membrane but at a much slower rate than the selectively permeable species. It is this difference in rates of permeation which is used to separate the gaseous species or reduce the concentration of the less selectively permeated species in the region to which the permeating gases permeate, or decrease the concentration of the more selectively permeated gas in the region from which the permeating gases permeate.

In such separations, the relative rate of permeation, that is, the difference in rate of permeation between the selectively permeating gas and the non-selectively permeating gas, is a major factor in the separation achieved. The higher the ratio of permeation of the selectively permeable gas over the non-selectively permeable gas, the better the membrane will perform. Therefore, it is desirable to have as high a ratio as possible.

Another important property of membranes is the permeability of the gases through the membrane. If the permeability is too low, the membrane may not provide enough flow through the membrane to be economical for separations. Some potential candidates for membrane separations provide good separation factors but low permeabilities for dense membranes. Flux is the volumetric flow of gas through a particular membrane for a unit area and time, and indicates the productivity of the membrane. The separation factor is the ratio of the permeabilities of the selectively permeating species over the non-selectively permeating species. One technique used to improve the flow of the permeating gases through the membrane is to form asymmetric membranes. Asymmetric membranes comprise a membrane with a thin dense region wherein the separation is effected, and a larger region which is porous through which gases pass with little resistance which provides support for the thin dense layer. The discriminating region is much thinner than a solid or homogeneous membrane can be, as the porous layer provides the structural integrity of the membrane and supports the thin dense, layer. This thin, dense layer is located on one surface of the membrane. The formation of an asymmetric membrane with good separation factors and permeabilities is a difficult chemistry and engineering problem. As the thin, dense layer is on one of the surfaces of the membrane, this thin, dense layer is subject to being damaged by handling or exposure to contaminants. This damage can result in leaks in the membrane and render the membrane less effective in separating gases.

Presently, membranes derived from acetate esters, for example cellulose diacetate, and cellulose triacetate, polyamides, polyimides, and olefins, for example polyethylene, polypropylene, poly-4-methylpentene-1, are used for gas separations. Recently it has been discovered that bisphenol based polycarbonates, and polyestercarbonates wherein at least 25 percent by weight of the bisphenol moieties are tetrahalogenated, wherein the halogen is Cl or Br, exhibit excellent separation factors for the separation of oxygen from nitrogen, but exhibit low flux in the dense form.

Patent Abstracts of Japan, vol. 4, no. 190 (C-37)[672], 26th December 1980; & JP-A-55 129 109, discloses liquid separation membranes comprising a polymeric matrix with two porous surfaces and a less porous interior region. This reference indicates that the hole diameter of the pores in the interior region is normally preferably about 0.02 to 0.1 microns which corresponds to 200 to 1,000 Å. This pore size is wholly ineffective in conducting gas separations.

What are needed are membranes with regions capable of separating one or more gases from one or more other gases which have both good separation factors and flux. What are further needed are membranes which have such regions which are not subject to damage due to handling or exposure to contaminants. What are further needed are membranes which exhibit good physical properties.

The invention is a semi-permeable membrane which comprises a polymeric matrix with two porous surfaces and an interior dense region. According to the invention the interior dense region functions to

separate one or more gases from one or more other gases.

The membranes of this invention exhibit excellent separation factors and flux. Such membranes are less prone to being damaged due to handling and exposure to contaminants due to the internal region which affects the separation, as the porous surfaces function to protect such region.

The invention includes a composition useful for the preparation of semi-permeable membranes of a bisphenol-based polycarbonate wherein at least 25 percent by weight of the bisphenol moieties are tetrahalogenated, wherein the halogen is Cl or Br, the composition comprising (i) a bisphenol-based polycarbonate wherein at least 25 percent by weight of the bisphenol moieties are tetrahalogenated, wherein the halogen is Cl or Br, (ii) a solvent for such polycarbonate, and (iii) a non-solvent for such polycarbonates. The composition is useful for extruding membranes wherein the membranes are formed with a discriminating region capable of separating oxygen from nitrogen.

The composition of this invention allows the formation of membranes with excellent physical properties, good separation factors for oxygen and nitrogen, with excellent fluxes.

The invention is a process for the preparation of a semi-permeable membrane comprising bisphenol-based polycarbonates wherein at least 25 percent by weight of the bisphenol moieties are tetrahalogenated wherein the halogen is Cl or Br, and the membrane prepared by such process. The process generally comprises: forming a mixture comprising (i) a bisphenol-based polycarbonate wherein at least 25 percent by weight of the bisphenol moieties are tetrahalogenated, wherein the halogen is Cl or Br, (ii) a solvent for such polycarbonate, and (iii) a non-solvent for such polycarbonate, wherein the mixture has a sufficient viscosity to allow extrusion at temperatures at which the mixture is homogeneous; heating the mixture to a temperature at which the mixture is a homogeneous fluid and extrudable; extruding the heated mixture into a shape suitable for membrane use; passing the formed membrane through a quench zone wherein the mixture undergoes phase separation, and the major portion of the solvent and non-solvent are removed from the formed membrane; wherein the membrane formed is a POWADIR membrane with a discriminating region capable of separating oxygen from nitrogen.

Another aspect of this invention is the membranes prepared by the process of this invention.

The process of this invention prepares POWADIR membranes with excellent separation factors and flux. Such membranes have excellent mechanical and thermal properties.

The membranes of this invention have two porous surfaces. More particularly, the membranes have two porous regions which start at the surface of the membrane and continue for some distance into the membrane. Such porous regions are capable of passing the desired gases to separate through such regions without much resistance. The pores on the surfaces are large enough such that gases freely pass through them without any resistance. Preferably, the pores on the surfaces are between about 0.025 and 1µm (250 and 10,000Å). In the embodiment wherein the membrane is a hollow fiber, the inner surfaces preferably have pores of from about 0.025 to about 1µm (about 250 to about 10,000Å), and the outer surfaces preferably have pores of from 0.025 to 0.3µm (250 to 3,000Å).

The membranes of this invention comprise a porous layer on both sides of the membrane, i.e., both the exterior and the interior of a hollow fiber, with an interior region which is discriminating or functions as if it were dense, that is a permeant cannot cross from one surface of the membrane to the other without permeating into and through a non-porous or dense region of the membrane. Such a discriminating region may be a region of non-continuous porosity. In one embodiment of the hollow fiber form of this membrane the region of non-continuous porosity is located near the lumen of the fiber.

The critical feature of the invention is that such membranes function to separate one or more gases from one or more other gases. Preferably such membranes have an internal region which functions to separate one or more of the gases contacted with the membranes from one or more of the other gases contacted with the membranes. This region may be a dense region, a region of non-continuous porosity, or a region which resembles a closed cell foam.

The membranes of this invention may be prepared from any polymeric material which has inherent properties which pass one or more gases through its bulk phase at a faster rate than one or mor other gases. Those skilled in the art would recognize which polymeric materials would be suitable. Preferable polymeric materials comprise polyimides, polycarbonates, polyesters, polyestercarbonates, polysulphones, polyethersulphones, polyamides, polyphenylene oxides, and polyolefins. More preferred polymeric materials comprise polyesters, polycarbonates, and polyestercarbonates. Even more preferred polymeric materials comprise polycarbonates. More preferred polycarbonates are those derived from a bisphenol wherein at least 25 percent of the bisphenol moieties in the backbone of the polymer are tetrahalogenated wherein the halogen is chlorine or bromine. The polymers useful in this invention should be polymerized to the extent that the polymers will form a membrane with sufficient mechanical strength to withstand use conditions.

The membranes may be fabricated in any useful membrane form, for example flat sheet, hollow fiber, or hollow tube form. The preferred form is the hollow fiber form. These membranes may be used in any form of membrane device, for example hollow fiber devices, hollow tube devices, spiral wound devices, and plate and frame devices.

The membranes of this invention may be used to separate components in a gaseous stream capable of being separated; such separations are well known to those skilled in the art. Preferred separations include the separation of oxygen from nitrogen, nitrogen from methane, carbon dioxide from light hydrocarbons especially methane, and helium and hydrogen from other gases such light hydrocarbons. The preferred separation is the separation of oxygen from nitrogen.

The membranes of this invention may be prepared by the following process. A mixture of the polymeric material, a solvent for the polymeric material, and a non-solvent for the polymeric material is prepared. Such mixture is preferably homogeneous at extrusion temperatures. The mixture should be sufficiently viscous to retain its integrity until the membrane is formed. It is preferable that the mixture is close to the phase boundary between a one- phase mixture and a two-phase mixture, so the concentrations of the components should be chosen such that the mixture is near the boundary. If the non-solvent concentration is too low, the discriminating region will form on one surface of the membrane. If the non-solvent concentration is too high, the mixture will not be homogeneous and the membrane may have pores which communicate through the membrane. The polymer concentration should be high enough such that the mixture is sufficiently viscous to extrude and retain its shape at under extrusion conditions. If the polymer concentration is too high, the discriminating region will be too thick and the pores will be too small, thus reducing the flux through the formed membrane. The mixture is heated to, or above, the extrusion temperature. The temperature for the extrusion is that temperature such that the mixture has sufficient viscosity for extrusion, and which facilitates phase inversion of the material when exposed to the conditions of the quench zone or zones. The polymer mixture is extruded through a die of the desired shape into and through one or more quench zones, wherein one of the quench zones comprises a liquid which is a solvent for the solvent and non-solvent, and which has very low solubility in the polymeric material. The process is performed under conditions such that the polymer mixture undergoes phase inversion in one or more of the quench zones, wherein a phase rich in the polymeric material and a phase rich in the solvent and the non-solvent are formed, and the solvent and non-solvent is removed from both phases.

The preferred polycarbonates useful in this invention are derived from bisphenols wherein a significant portion of the bisphenols used to prepare the polycarbonates are tetrahalosubstituted; more preferably the tetrahalo substituents are found in the 3,5-positions on the aromatic or phenolic rings. The presence of a significant portion of the residue of tetrahalo bisphenols enhance the properties of membranes that are prepared therefrom. More particularly, such membranes have enhanced separation factors with respect to oxygen/nitrogen, hydrogen/methane, and carbon dioxide/methane separations.

More preferably the polycarbonates useful in this invention comprise polymers with backbone units which correspond to the formula

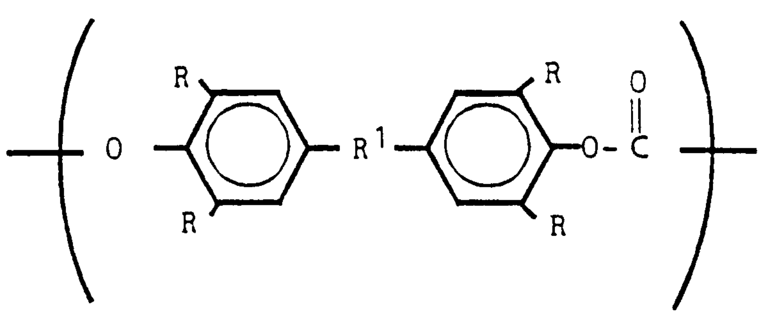 Formula I

wherein R at each occurrence is independently H, Cl, Br, or $C_1$-$C_4$ alkyl; and $R^1$ is carbonyl,-S-, $-SO_2-$, -O-, a $C_1$-$C_6$ divalent hydrocarbon, a $C_1$-$C_6$ divalent halocarbon radical, or an inertly substituted $C_1$-$C_6$ hydrocarbon radical, with the proviso that at least 25 weight percent of the bisphenol moieties in Formula I bear R groups which are exclusively Br, Cl, or mixtures thereof.

Preferably, at least 35 weight percent of the bisphenol moieties in the polycarbonate backbone bear R groups which are exclusively bromine, chlorine, or mixtures thereof. More preferably, at least 50 weight percent of the bisphenol moieties in the backbone bear R groups which are exclusively bromine, chlorine,

or mixtures thereof. Even more preferably, at least 75 weight percent of the bisphenol moieties in the polycarbonate backbone bear R groups which are exclusively bromine, chlorine, or mixtures thereof. Even more preferably, the polycarbonate is derived from bisphenols where R is exclusively bromine, chlorine, or mixtures thereof. In the embodiment wherein the polycarbonate is prepared from tetrachlorobisphenols, it is preferable that the polycarbonate backbone contain about 90 percent by weight or greater units derived from tetrachlorobisphenols, more preferably 95 percent by weight, and most preferably 100 percent by weight. Bromine is the preferred halogen herein. Examples of preferred bisphenols which bear R groups which are exclusively Br or Cl are 2,2-bis(3,5-dibromo-4-hydroxyphenyl)-propane and 2,2-bis(3,5-dichloro-4-hydroxyphenyl)-propane with 2,2-bis(3,5-dibromo-4-hydroxyphenyl)-propane being most preferred. Preferably those R groups which are not halogen are methyl or hydrogen, and most preferably hydrogen.

In the hereinbefore presented formulas, R is preferably chlorine, bromine, hydrogen or $C_{1-4}$ alkyl, more preferably chlorine, bromine, hydrogen, or methyl, even more preferably chlorine and bromine, and most preferably bromine. $R^1$ is preferably a $C_{1-6}$ divalent hydrocarbon, more preferably a $C_{1-6}$ alkylidene moiety, even more preferably an isopropylidene moiety.

The polycarbonates useful in this invention can be prepared by any process known in the art which prepares polycarbonates with suitable properties for membrane formation. See Encyclopedia of Polymer Science & Technology, Editor Mark et al, Interscience Division of John Wiley & Sons, N.Y., N.Y., 1969, Vol. 10, pages 714-725. The polymers useful in this invention should be polymerized to the extent that the polymers will form a membrane with sufficient mechanical strength to withstand use conditions.

In one preferred embodiment the halogenated bisphenol based polycarbonate membranes are prepared by the process which comprises:

(A) forming a mixture comprising

(i) a bisphenol polycarbonate wherein at least 25 percent by weight of the bisphenol moieties are tetra halogenated wherein the halogen is chlorine or bromine;

(ii) a solvent for the polycarbonate which comprises a glycol ether which corresponds to the formula $R^3O\text{-}(CH_2CH_2O)_r\text{-}R^3$ wherein $R^3$ is methyl or ethyl, and r is an integer of between about 1 and 20; a dialkyl ketone wherein the alkyl groups independently are methyl or ethyl; morpholine substituted on the nitrogen atom with an alkyl, formyl or alkanoyl moiety; pyrrolidinone or N-$C_{1-4}$ alkyl, N-$C_{5-6}$ cycloalkyl, or N-$C_{6-10}$ aryl or alkaryl substituted pyrrolidinone; $C_{1-4}$ alkoxycarbonyl, formyl, nitro, or halo substituted benzene; tetrahydrofuran; dimethyl formamide, cyclohexanone; N,N-dimethyl acetamide; acetophenone; caprolactone; methylene chloride; sulfolane; cyclohexyl acetate; 1,1,3,3, tetramethylurea; isophorone; 1-formyl-piperidine; methyl salicylate; hexa-methylphosphoramide; phenyl ether; or bromonaphthalene; and,

(iii) a non-solvent for the polycarbonate which comprises a glycol or glycol ether which corresponds to the formula $R^4O\text{-}(CH_2CH_2O)_q\text{-}R^4$ wherein $R^4$ represents independently in each occurrence hydrogen or $C_{1-4}$ alkyl, and q is an integer of about 1 to about 250; an ester corresponding to the formula $R^5COOR^6$ wherein $R^5$ is hydrogen or $C_{1-19}$ alkyl, and $R^6$ is $C_{1-10}$ alkyl; a $C_{1-10}$ alkanol; cyclohexane, unsubstituted or substituted with an alkyl, cycloalkyl, or perfluoroalkyl moiety; a $C_{5-20}$ alkane; a dialkyl ketone wherein at least one of the alkyl moieties is $C_3$ or greater; an amide corresponding to the formula $R^7CONHR^8$ wherein $R^7$ is hydrogen or $C_{1-10}$ alkyl and $R^8$ is $C_{1-10}$ alkyl; an acetyl or $C_{1-10}$ alkyl nitrile; acetone; a $C_{1-10}$ alkyl aldehyde; a trialkyl amine; nitromethane; trialkyl orthoformate; diacetone alcohol: dimethyl malonate; decahydronaphthalene; tetrahydronaphthalene; malononitrile; dicyclohexyl; ethylene carbonate; sulfolane; alkyl or cycloalkyl substituted benzene; or water;

(B) heating the mixture to a temperature at which the mixture forms a homogeneous fluid and is extrudable;

(C) extruding the heated mixture into a shape suitable for membrane use; and,

(D) passing the formed membrane through one or more quench zones, wherein the mixture phase separates, and the major portion of the solvent and non-solvent are removed from the formed membrane wherein one of such quench zones comprises a liquid which has a very low solubility in the polycarbonate,;wherein the membrane formed has a porous outer and inner surface with a discriminating region capable of separating oxygen from nitrogen.

The polycarbonate mixture may be extruded into any shape which is useful as a membrane. Such shapes include flat sheets, hollow tubes, and hollow fibers. The most preferred shape is the hollow fiber shape. The process for preparing this preferred shape may be described as follows. The following description of the process with respect to the formation of hollow fiber membranes refers to one fiber, but the process may be performed on one fiber at a time or a multitude of fibers simultaneously. In fact, most hollow fiber preparation processes involve forming several fibers and processing them simultaneously. The

description shall be understood to include forming and processing one fiber or a multitude of fibers simultaneously.

A process for preparing a hollow fiber comprising a tetrahalogenated bisphenol polycarbonate which comprises:

(A) forming a mixture comprising

(i) a bisphenol polycarbonate wherein at least 25 percent by weight of the bisphenol moieties are tetrahalogenated wherein the halogen is chlorine or bromine;

(ii) a solvent for the polycarbonate as described hereinbefore; and,

(iii) a non-solvent for the polycarbonate as described hereinbefore;

wherein the mixture has a sufficient viscosity to allow extrusion at temperatures at which the mixture is homogeneous;

(B) heating the mixture to a temperature at which the mixture forms a homogeneous fluid and is extrudable;

(C) extruding the heated mixture into a hollow fiber form;

(D) passing the formed fiber through one or more quench zones wherein the mixture phase separates, and the major portion of the solvent and non-solvent are removed from the formed fiber, while a core fluid is passed down the hollow core of the fiber under conditions sufficient to prevent the fiber from collapsing, wherein one of the quench zones comprises a liquid which has low solubility in the polycarbonate; and,wherein the fiber formed has a porous inner and outer surface and the fiber is capable of separating oxygen from nitrogen.

Preferably, the polymer solvent non-solvent mixture has a viscosity at extrusion temperatures of 1000 to 20000 Pa.s (10,000 to 200,000 poise) in the embodiment wherein the core fluid is a gas, and more preferably between about 3000 and 4500 Pa.s (30,000 and 45,000 poise). The viscosities described herein are based upon rheometric measurements taken at 82 °C at a frequency of 1 radian per second. Preferably, the polymer used to prepare the membranes has a molecular weight ($M_w$) of 100,000 or greater, more preferably between 100,000 and 300,000.

Discriminating region refers to a region which functions to separate one or more gases from one or more other gases, and may be a non-porous region or the equivalent of a non-porous region, for example, a region of non-continuous porosity. "Homogeneous fluid" as used herein refers to a fluid which is a mixture of components and which is in one phase. Extrusion refers herein to passing a fluid of the polymer mixture through a die to form the fluid into the desired shape. "Extrudable" as used herein refers to a material which is capable of extrusion to form a desired shape, wherein the material formed to such shape once formed retains such shape. "Quench" as used herein refers to exposing the polymer mixture to conditions such that the polymer mixture partially or completely undergoes a phase separation. "Phase separation" refers herein to the phenomena wherein the polymer mixture undergoes separation into a polymer rich phase and a solvent-non-solvent rich phase. "Leaching" as used herein refers to the phenomena wherein entrained solvent and non-solvent liquids are removed from the polymer rich phase.

The polymer mixture, which is extruded to form the membranes of this invention, comprises the polycarbonate described hereinbefore, a solvent for the polycarbonate, and a non-solvent for the polycarbonate. The solvent functions to dissolve the polymer and the non-solvent into a homogeneous solution at the temperatures used for extrusion so that the mixture may be extruded. The non-solvent functions to aid in the formation of pores in the polymer when it undergoes phase separation in the quench zone.

An optional fourth component, a dissolving medium, may be added to the polymer mixture to aid in the formation of a homogeneous mixture. The dissolving medium is used to enhance the dissolution of the polymer into the solvent non-solvent mixture. Usually the dissolving medium is removed from the mixture prior to the extrusion, usually by flashing it off.

The solvent may be any solvent for the polymer from which the membranes are to be formed, which dissolves enough of the polymer so as to form a solution viscous enough to be extrudable at the extrusion temperatures. The amount of solvent used depends upon the polymer used, the non-solvent used, the desired properties of the membrane, and the method of quenching the fiber.

In the embodiment wherein the polymer is a tetrahalosubstituted bisphenol based polycarbonate, the following solvents are preferred. The glycol ethers useful as a solvent for the polycarbonate corresponds to the formula $R^3O\text{-}(CH_2CH_2O)_r\text{-}R^3$ wherein $R^3$ is methyl or ethyl, and r is an integer of 1 to 20. Preferably, r is an integer of 1 to 10, and even more preferably 1 to 4, most preferably when $R^3$ methyl r is 1 to 4, and when $R^3$ is ethyl r is 2 to 4. Examples of such glycol ethers include ethylene glycol dimethyl ether, diethylene glycol dimethyl ether, and bis(2-methoxy-ethyl ether). Preferred dialkyl ketones useful as solvents for the polycarbonates include dimethyl ketone, diethyl ketone, and methyl ethyl ketone. Preferred substituted morpholines are those with a $C_{1-10}$ alkyl, formyl or$C_{1-10}$ alkanoyl moiety substituted on the

nitrogen atom; more preferred are those with a $C_{1-4}$ alkyl, formyl or $C_{1-4}$ alkanoyl moiety substituted on the nitrogen atom. Examples of substituted morpholines include N-formylmorpholine and N-ethylmorpholine. Preferred pyrrolidinones useful as solvents include pyrrolidinone, N-methyl pyrrolidinone, N-ethyl pyrrolidinone, N-cyclohexyl pyrrolidinone, N-benzyl pyrrolidinone, and N-phenyl pyrrolidinone; with N-methyl pyrrolidinone and N-ethyl pyrrolidinone more preferred; and N-methyl pyrrolidinone most preferred. The term pyrrolidinone as used herein refers to compounds named as pyrrolidinones and pyrrolidones. Preferred substituted benzenes useful as solvents for the polycarbonates correspond to the formula:

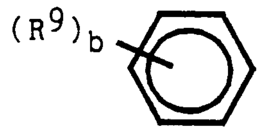

wherein $R^9$ is $C_{1-4}$ alkoxycarbonyl, nitro, halo or a formyl moiety; and b is an integer of 1 to 6, with the proviso that wherein $R^9$ is alkoxycarbonyl b is 1. The preferred halogens are chlorine and bromine, with chlorine most preferred. Preferably, b is 1 to 3. Examples of substituted benzenes useful as solvents include chlorobenzene, dichlorobenzene, benzaldehyde, nitrobenzene, ethyl benzoate, methyl benzoate, and 1,2,4-trichlorobenzene.

Preferred solvents comprise N-methylpyrrolidinone, tetrahydrofuran, ethylene glycol dimethylether, diethylketone, N-ethylmorpholine, dimethylformamide, cyclohexanone, bis(2-methoxyethylether), N,N-dimethylacetamide, acetophenone, methylene chloride, or sulfolane. More preferred solvents include N-methylpyrrolidinone, ethylene glycol dimethylether, tetrahydrofuran, diethylene glycol dimethylether, acetophenone, methylene chloride, or cyclohexanone. The most preferred solvent is N-methylpyrrolidinone.

The non-solvent may be any compound which does not substantially dissolve the polymer from which the membrane is to be prepared at extrusion temperatures, is soluble in the solvent, and which aids in the formation of pores in the polymer rich phase when the spin mixture is extruded into a quench zone. The amount of non-solvent used depends upon the polymer used, the solvent used, the desired properties of the membrane, and the method of quenching the fiber. The particular non-solvents useful for each polymer are well known to those skilled in the art or readily ascertainable by those skilled in the art.

The following non-solvents are preferred for the polycarbonates. The glycols and glycol ethers useful as non-solvents for the polycarbonate correspond to the formula $R^4O\text{-}(CH_2CH_2O)_q\text{-}R^4$ wherein $R^4$ is independently in each occurrence hydrogen or $C_{1-4}$ alkyl, and q is an integer of 1 to 250. Preferably $R^4$ is hydrogen. Preferably q is an integer of 2 to 100, more preferably of 3 to 60, and most preferably 3 to 15. Examples of preferred glycols and glycols ethers include 2-ethoxyethanol, polyethylene glycols with molecular weights of up to 1450, triethylene glycol, diethylene glycol, diethylene glycol dibutylether. Esters useful as non-solvents correspond to the formula $R^5COOR^6$ wherein $R^5$ is hydrogen or $C_{1-19}$ alkyl, and $R^6$ is $C_{1-10}$ alkyl. Preferably $R^5$ is hydrogen or $C_{1-4}$ alkyl, and $R^6$ is $C_{1-4}$ alkyl. Most preferably, $R^6$ is ethyl or methyl. Examples of preferred esters include methyl formate, ethyl formate, methyl acetate, n-octyl acetate, methyl laurate, methyl myristate, butyl stearate, and methyl stearate. Preferred alkanols useful as non-solvents include methanol, ethanol, 2-propanol, and 1-hexanol. Preferred cyclohexanes useful as non-solvents include those which are unsubstituted or substituted with a $C_{1-10}$ alkyl, $C_{3-10}$ cycloalkyl or $C_{1-4}$ perfluoroalkyl moiety. More preferred cyclohexanes useful as non-solvents include those which are unsubstituted or substituted with a $C_{1-4}$ alkyl, $C_{5-6}$ cycloalkyl or trifluoromethyl moiety. Examples of such cyclohexanes include cyclohexane, methylcyclohexane, isopropylcyclohexane, t-butyl-cyclohexane and dicyclohexyl. Preferred $C_{5-20}$ alkanes useful as non-solvents include hexane, dodecane, and hexadecane. Preferred dialkyl ketones useful as non-solvents for the polycarbonates include those wherein one of the alkyl moieties is $C_{3-10}$ and the other is $C_{1-10}$. Examples of preferred dialkyl ketones useful for non-solvents include methyl isobutyl ketone, and diisopropyl ketone. Preferred amides useful as non-solvents include those amides corresponding to the formula $R^7CONHR^8$ wherein $R^7$ is preferably hydrogen or $C_{1-3}$ alkyl, and $R^8$ is preferably $C_{1-4}$ alkyl. Examples of preferred amides include N-methyl formamide, and N-methyl acetamide. Preferable nitriles include acetyl and $C_{1-3}$ alkyl nitriles. Examples of preferred nitriles include acetonitrile, and propionitrile. Preferred aldehydes are $C_{1-4}$ alkyl aldehydes, with butyraldehyde most preferred. Preferred substituted benzenes include formyl, alkyl, and cycloalkyl substituted benzenes which correspond to the formula

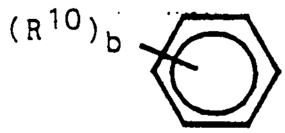

wherein $R^{10}$ is $C_{1-10}$ alkyl, $C_{3-10}$ cycloalkyl, or formyl, and b is as defined hereinbefore. Preferably, $R^{10}$ is $C_{1-4}$ alkyl, $C_{5-6}$ cycloalkyl, or formyl.

Preferred non-solvents for the polycarbonates include triethylene glycol, 2-ethoxyethanol, diethylene glycol dibutyl ether, polyethylene glycols with molecular weights of up to 1450, diethylene glycol, dodecane, hexadecane, cyclohexane, methylcyclohexane, perchloroethylene, diisopropylketone, isopropylketone, isopropylcyclohexane, t-butylcyclo-hexane, N-methylformamide, decylene, N-methylacetamide, tetralin, dicyclohexyl, cyclohexyl benzene, carbon tetrachloride, or water. More preferred non-solvents for the polycarbonates include water, diisopropylketone, tetraethylene glycol dimethylether, diethylene glycol dibutyl ether, hexadecane, diethylene glycol, triethylene glycol, polyethylene glycol with molecular weights of up to 1450, 2-ethoxyethanol, carbon tetrachloride, or dodecane. The most preferred non-solvents for the polycarbonates are triethylene glycol, and polyethylene glycols with molecular weights of up to 400.

Some compounds may be both a solvent and a non-solvent, wherein its function is dictated by the temperature at which the membrane is formed.

In some embodiments, a solubilizing agent is used to aid in preparing a homogeneous polymer mixture. The solubilizing agent may be any solvent which aids in preparing a homogeneous polymer mixture. The solubilizing agent is preferably a solvent which has a boiling point lower than the extrusion temperature and the boiling points of the solvent and non-solvent. The polymer mixture may be formed at temperatures below the extrusion temperature and the solubilizing agent aids in forming a homogeneous mixture at such temperatures. Preferably the solubilizing agent flashes off, or is removed, prior to extrusion. Preferred solubilizing agents for the polycarbonate based mixtures include halogenated hydrocarbons, cyclic and non-cyclic ethers, and alkyl ketones. More preferred solubilizing agents include methylene chloride, tetrahydrofuran, methyl ethyl ketone, methyl iodide, and chloroform. A most preferred solubilizing agent is methylene chloride.

The solubilizing agent is not used in embodiments where the mixture is mixed at elevated temperatures under high shear or with good mixing, where the mixture is to be extruded shortly after formation of the homogeneous mixture.

Certain solvents and non-solvents may cause degradation of the polymer if the polymer mixture is maintained at elevated temperatures for extended periods of time. The solvent and non-solvent should be chosen to be compatible; in particular the non-solvent must be soluble in the solvent, and the non-solvent must be capable of forming pores in the quenched polymer in the presence of the solvent. Skilled artisans often describe the solvent and non-solvent as a solvent non-solvent pair. Preferred solvent non-solvent pairs for the polycarbonates include N-methylpyrrolidinone and triethylene glycol, N-methylpyrrolidinone and a polyethylene glycol with a molecular weight of up to about 1450, ethylene glycol dimethylether and water, tetrahydrofuran and water, ethylene glycol dimethylether and diisopropylketone, tetrahydrofuran and diisopropyl-ketone, diethylene glycol dimethylether and water, diethylene glycol dimethylether and tetralin, tetraethylene glycol dimethylether and N-methyl-acetamide, acetophenone and diethylene glycol dibutylether, methylene chloride and carbon tetrachloride, cyclohexanone and dodecane, and acetophenone and hexadecane. More preferred solvent non-solvent pairs for the polycarbonates are N-methylpyrrolidinone and triethylene glycol, cyclohexanone and dodecane, N-methylpyrrolidinone and a polyethylene glycol with a molecular weight of up to about 400, and acetophenone and hexadecane. The most preferred solvent non-solvent pairs for the polycarbonates are N-methylpyrrolidinone and triethylene glycol, and N-methylpyrrolidinone and a polyethylene glycol with a molecular weight of up to about 400.

The polymer mixture should comprise appropriate amounts of the polymer, solvent, and non-solvent to be extrudable at the extrusion temperatures and to form the membranes of this invention. In particular, the solution should have an acceptable viscosity for such extrusion at extrusion temperatures. The upper limit on the viscosity is that viscosity at which the solution is too viscous to extrude. The lower limit on the viscosity is that viscosity at which the fiber loses its integrity after leaving the vicinity of the extrusion die.

Preferably, the spin composition comprises between 30 and 60 percent by weight of the polymer, and 40 and 70 percent by weight of the combined solvent and non-solvent. More preferably, the spin composition comprises between 40 and 60 percent by weight of the polymer, and 40 and 60 percent by weight of the combined solvent and non-solvent. In the embodiment wherein the polymer is a

tetrahalogenated bisphenol based polycarbonate the spin composition comprises, even more preferably, between 44 and 56 percent by weight of polymer and between 44 and 56 percent by weight of a mixture of solvent and non-solvent, and most preferably, the spin composition comprises between 50 and 55 percent by weight of polymer and between 45 and 50 percent by weight of the combined solvent and non-solvent. The ratio of the solvent to the non-solvent is dependent upon the polymer, the solvent and the non-solvent used and the relative solubilities with respect to one another. The solvent and non-solvent are present in a ratio of 0.9 to 5.1, more preferably between 1.8 and 2.7, and most preferably between 2.0 and 2.4.

Prior to extrusion, the mixture is heated to a temperature at which the mixture is homogeneous and has an appropriate viscosity for extrusion. The upper limit on the pre-extrusion temperature is that temperature at which the polymer undergoes detrimental degradation in the presence of the particular solvent and non-solvent. Detrimental degradation means herein that the polymer degrades sufficiently that the viscosity of the polymer mixture is significantly lowered below that viscosity at which acceptable membranes can be formed, or the polymer mixture cannot form a membrane of this invention which is capable of separating oxygen from nitrogen. In the embodiment wherein the membrane is a hollow fiber and the core fluid is a gas, this is indicated where the hollow fiber collapses in the quench zone. In the embodiment wherein the polymer is a tetrahalosubstituted polycarbonate the preferred upper pre-extrusion temperatures are 200 °C or below, more preferred upper pre-extrusion temperatures are 130 °C or below. This upper limit is significantly affected by the kind of extrusion apparatus that is used. Generally there is a tradeoff between the temperature of the composition and the residence time in the heating area. With lower residence times, the polymer mixture can be heated to higher temperatures. The lower limit on the pre-extrusion temperature is that temperature at which the viscosity of the spin solution is sufficiently low enough to allow extrusion. In the embodiment wherein the polymer is a tetrahalosubstituted polycarbonate the preferred lower temperatures are 50 °C or above, more preferred lower temperatures are 90 °C or above. Generally, the spin solution is extruded at the temperatures described hereinbefore with respect to the pre-extrusion heating. Provided the temperature of the polymer mixture during extrusion is within the functional limits described hereinbefore, the actual temperature of extrusion can be significantly lower than the pre-extrusion temperature, for example, as much as 20 °C lower.

The polymer is extruded into one or more quench zones. Such zones function to facilitate phase separation of the polymer mixture, removal of a large portion of the solvent and the non-solvent, and to provide a zone where the fiber may be drawn to its final diameter. The quench zone may comprise one or more zones. At least one of such zones must be a liquid zone which comprises a liquid which has a low solubility in the polymer from which the membrane is to be formed. Such zones may further comprise air quench zones, liquid quench zones, or a combination thereof. In one embodiment, the polymer mixture may be extruded directly into a liquid quench zone, and thereafter may be passed into one or more additional liquid quench zones.

In a preferred embodiment the polymer mixture is extruded into an air quench zone, and thereafter passed into one or more liquid quench zones. In this embodiment the polymer mixture begins to lose a portion of the solvent and non-solvent due to volatilization and a significant amount of the draw down of the fiber occurs in the air quench zone. Further, the phase separation of the polymer mixture may begin in this zone. The temperature and residence time in the air quench zone should be sufficient such that there is partial removal of the solvent in the zone, the polymer mixture does not undergo complete phase separation in said zone, and the fiber undergoes significant draw down during the process. If the polymer mixture completely phase separates prior to exiting the air quench zone, a significant amount of solvent and non-solvent may be entrained in the polymer mixture such that it cannot easily be removed from the polymer. The upper limit on the temperature on the air zone is that temperature below which the polymer mixture has sufficient viscosity to retain its shape and integrity. Preferred upper temperatures are 90 °C or below, with more preferred upper temperatures of 40 °C or below, and the most preferred upper temperatures of 25 °C or below. The lower temperature of the air quench zone is that temperature above which the polymer mixture undergoes substantially complete phase separation while in the air quench zone. Preferred lower temperatures are 0 °C or above, with more preferred lower temperatures of 10 °C or above, and the most preferred lower temperatures of 20 °C or above. As noted hereinbefore, the temperatures and the residence time are interdependent variables; at cooler temperatures the residence time is shorter while at higher temperatures the residence time is longer so as to achieve the desired results in the air quench zone.

The preferred upper limit of the residence time in the air quench zone is 10 seconds or less, more preferably 6 seconds or less, and most preferably 1 second or less. The lower residence time is preferably 0.1 seconds or greater and most preferably .25 seconds or greater. If the environment in the air quench zone is too humid, damage to the extruded shape may occur. Preferably, the humidity at about 24 °C is 60 percent or less. A more preferred humidity range is between about 30 and 60 percent at 24 °C. It may be

desirable to place a shroud around the air quench zone to cut down variability in the shapes due to undesired air currents. In some embodiments, it may be desirable to cool the shroud to allow better control of the quenching in the air draw zone. In one embodiment it may be preferred to pass a gentle stream of air in a counter current fashion along the membrane as it is extruded.

The speed of extrusion is not critical to the process, provided an acceptable residence time in the quench zones is achieved. Therefore, the line speed may be as fast as the equipment, including the size of the quench zones, allows and which results in acceptable properties in the membranes. Preferably, lower line speeds are 15 m (50 feet) per minute or above, with 45 m (150 feet) per minute or above preferred. Preferably, upper line speeds are 300 m (1000 feet) per minute or below, with 150 m (500 feet) per minute or below preferred.

In that embodiment where hollow fiber membranes are being formed, a core fluid is preferably passed down the core of the hollow fiber to prevent the fiber from collapsing. The core fluid may be any fluid which prevents the fiber from collapsing and which does not deleteriously affect the membrane properties. The core fluid may be a gas or a liquid, preferably a gas. Preferred core gases may include air, nitrogen, argon, or a gas which enhances the properties of the membrane. The core fluid pressure may be any pressure which prevents the fiber from collapsing and which does not deleteriously affect the membrane properties of the fiber, and is preferably 2.54 to 12.7 mm (0.1 to 0.5 inches) of water, more preferably 6.4 to 10.16 mm (0.25 to 0.4 inches) of water.

From the air quench zone, the membrane is passed into one or more liquid quench baths. In the liquid quench baths, the membrane completes phase separation and a major portion of the remaining solvent and non-solvent are removed. The liquid quench baths can comprise any liquid which dissolves both the solvent and non-solvent and which does not deleteriously affect the membrane properties. Furthermore, the liquid used in the quench zones should have a very low solubility in the polymer; preferably the solubility is 5.0 percent by weight or lower. More preferably, the quench liquid has a solubility in the polymer of 3.0 percent by weight or lower, even more preferably of 1.0 percent by weight or lower, and most preferably of 0.5 percent by weight or lower, Examples of preferred quench liquids include lower alcohols, water, fluorocarbons, lower aliphatic hydrocarbons, or mixtures thereof. The preferred quench bath liquid for the tetrahalosubstututed bisphenol based polycarbonates is water.

Optionally, after leaving the first liquid quench bath, the membrane may be passed through or contacted with other liquid baths. The conditions of each bath are dependent upon on the number of baths used and the conditions of the other baths. The conditions of the first liquid quench bath are dependent upon whether other liquid quench baths are used. If only one bath is used, the conditions should be such that the fiber completes its phase separation, and the majority of the solvent and non-solvent are removed from the fiber in the bath. Under such circumstances, a preferred upper temperature is 90 °C or below and 30 °C or below being most preferred. The preferred lower temperature is 0 °C or above, with 20 °C or above being more preferred. The residence time under this condition should be sufficient to allow completion of the phase separation of the fiber and to allow removal of a significant portion of the remaining solvent and non-solvent. The residence time in the single bath can be as long as the economics of the process allow. Such residence times may be as long as no deleterious effects result from such residence times, for example damage from bacterial growth. Residence times of up to several days may be used. Preferably, the upper limit on the residence time is 30 minutes or lower, more preferably 10 minutes or lower. Preferably, the lower residence time is 2 minutes or greater, more preferably 5 minutes or greater.

In a preferred embodiment, two liquid quench baths are used. In this embodiment, the quench bath temperature and residence time in the first quench bath should be sufficient to result in significant phase separation of the polymer mixture in said zone, and to allow some of the solvent and non-solvent to be removed from the fiber. The lower bath temperature may be the temperature above the freezing point of the bath. Generally, the lower the bath temperature the better the bath functions. Where the bath comprises water the preferred lower temperature is 0 °C or greater. The preferred upper temperature is 30 °C or less, more preferably 20 °C or less, and most preferably 10 °C or less, the lower limit on the residence time is preferably 0.1 seconds or greater, and more preferably 1.0 second or greater. The upper residence time is preferably 600 seconds or less, more preferably 300 seconds or less, even more preferably 20 seconds or less, and most preferably 2 seconds or less. The second liquid quench bath functions to remove most of the remaining solvent and non-solvent. The conditions of the second liquid quench bath should be such that most of the solvent and non-solvent are removed during its presence in the bath. The temperature of the second liquid quench bath is that temperature which facilitates the removal of the solvent and non-solvent from the membrane. The upper temperature is that temperature at which either the bath remains in the liquid form, or the fiber properties are deleteriously affected. The lower limit on temperature is that temperature below which the solvent and non-solvent are no longer removed from the polymer mixture at

an acceptable rate. In the most preferred embodiment wherein the bath comprises water, the preferred lower temperatures are 70°C or above with a more preferred lower temperature of 80°C or above. In this embodiment, preferred upper temperatures are 100°C or below and more preferred upper temperatures are 90°C. Generally, as the temperature is lowered, the residence time required to achieve the same removal of solvent and non-solvent becomes longer. After the fiber is removed from the one or more quench baths, the fiber preferably contains 1.2 percent or less of the solvent and non-solvent, and more preferably less than 0.5 percent by weight of the solvent and non-solvent.

In the embodiments wherein one or more liquid quench baths are used, after removal from the first liquid quench bath, the fibers are passed over a set of godets and either passed into another bath or taken up. After completion of the processing, the fibers may be stored in a liquid which does not deleteriously affect the properties of the fibers. The most preferred liquid is water.

In the embodiment wherein the membrane is a hollow fiber, the fiber size is that fiber size which allows good separation of oxygen from nitrogen with reasonable flux, and acceptable pressure drops across the fiber. Preferably, the fiber size is between about 175 x 117 (outside diameter OD x inside diameter ID) µm to about 100 x 65 µm and has an OD/ID ratio of about 1.5. In the embodiment wherein the membrane is prepared from a tetrahalosubstituted bisphenol based polycarbonate, the membrane preferably has a separation factor for oxygen and nitrogen of 6.0 and greater, more preferably 6.5 or greater, and most preferably 6.8 or greater. Preferably, such membrane has a flux of $3.0 \times 10^{-6}$ scc/cm$^2$ cmHg sec. or greater, more preferably $6.0 \times 10^{-6}$ scc/cm$^2$ cmHg sec. or greater, and most preferably $8.0 \times 10^{-6}$ scc/cm$^2$ cmHg sec. or greater.

Before fabrication of a module, the membrane is preferably dried. The membrane may be dried by exposing it to the flow of air or an inert gas. Such exposure preferably takes place at a temperature of between about 20°C and about 80°C. Such gas flow may be a gentle flow either substantially perpendicular to the longitudinal direction of the membrane or along the longitudinal direction of the membrane. In another embodiment wherein the membrane is in the hollow fiber form, the gas may be blown down the core during winding of the module. The gas used to dry the membrane may be any gas which is sufficiently dry to aid in the removal of liquid from the pores and lumen of the membrane. Such gases include nitrogen, argon, and air.

As used herein, the term semi-permeable membrane refers to a membrane which displays different permeabilities for different species of molecules, and therefore may be used in the separation of ions and molecules having different permeabilities across the membrane. Permeate as used herein refers to those species which permeate through the membrane at a much faster rate than other species. Non-permeate refers herein to those species which permeate at a much slower rate than the other species present.

Preferably, the membrane exhibits permeability properties similar to a dense membrane with an effective thickness of about 10µ or less, more preferably of 1.5µm or less and most preferably of 0.5 µm or less. Effective thickness means herein that the membranes functions as if it is a homogeneous flat membrane of such thickness.

The membranes of this invention may be used for separating oxygen from nitrogen by contacting a gaseous stream containing oxygen and nitrogen with the membrane of this invention under conditions such that oxygen selectively permeates through the membrane, in comparison to nitrogen. Preferably, the membrane is sealingly engaged to a vessel which defines a space communicating with only one side of the membrane, such that the permeable oxygen contacting the other side of the membrane can permeate through the membrane to the non-communicating space, at a significantly faster rate than the nitrogen communicates or permeates through the membrane. Preferably, the oxygen and nitrogen are a part of an air stream. Preferably, the pressure on the communicating side of the membrane is 40 psia (276 kPa) to 1000 psia (6900 kPa), more preferably 80 (551 kPa) to 160 psia (1002 kPa). The temperature at which the mixed oxygen and nitrogen stream is contacted with the membrane is preferably 10 to 80°C. The pressure differential across the membrane is preferably 40 psia (276 kPa) to 1000 psia (6900 kPa), and more preferably 95 (655 kPa) to 160 psia (1002 kPa).

In one preferred embodiment, the membrane is in a hollow fiber form. In the embodiment wherein the membrane is in hollow fiber form, it is preferable to contact the mixed nitrogen and oxygen stream with a membrane on the inside of the hollow fiber under conditions such that the oxygen selectively permeates out of the hollow fibers and a stream which is rich in oxygen is taken off of shell side of the membrane. This oxygen enriched stream can be further oxygen enriched by contacting with one or more membranes in succession. Alternatively, the non-permeating oxygen depleted nitrogen stream may be further depleted of oxygen by contacting the stream with one or more further membranes in succession.

The following examples are included for illustrative purposes only and do not limit the scope of the claims or the invention. Unless otherwise stated, all parts and percentages are by weight. In each of the

examples at least four samples are tested for permeation properties. The flux and separation factor data are reported as an average of all of the samples with a standard deviation. Molecular weights as used herein are weight average molecular weights measured using narrow molecular weight range polystyrene standards.

Examples 1-14 - PREFERRED SPIN CONDITIONS FOR TETRABROMOBISPHENOL A POLYCARBONATE HOLLOW FIBER MEMBRANES

In order to form a basis from which comparisons can be made, a set of standard spinning and processing conditions are developed. The selection of this standard set of conditions is based on data from early attempts to prepare fibers and corresponds to fiber that is easily formed and gives consistent results from one spin run to another. A series of fourteen experiments using the standard set of conditions are performed to prepare fibers and the fibers are tested for oxygen and nitrogen permeation. These permeation and separation factors for these fourteen experiments are averaged to give a performance standard to measure all other experiments against.

A composition of 52 weight percent tetrabromobisphenol A polycarbonate, 32.5 weight percent N-methyl pyrrolidone (solvent), and 15.5 weight percent of triethylene glycol (non-solvent), (solvent to non-solvent ratio of 2.1) is fed into the melt pot of a melt pot extruder. Methylene chloride in an amount equal to about 30 weight percent of the total composition is added to the vessel. The mixture is heated to 95 °C and held until the mixture is a homogeneous solution. Most of the methylene chloride flashes during this heating step. A nitrogen purge is passed into the melt pot at 500 cc per minute and nitrogen containing volatilized methylene chloride is withdrawn from a port in the melt pot. From the melt pot the composition is passed to a transfer line and pumped to the spinnerette at a flow rate of 15 g/min. The transfer line and spinnerette face are held at a temperature of 75 °C. The composition is extruded into a hollow fiber shape through an annulus of 254 µm (0.01 inch) with an outside diameter of 1727 µm (0.068 inch) with a core gas pin feeding a core gas of nitrogen down the bore at a rate of 8.8 standard cubic centimeters a minute. The line speed is 30.5 meters (100 ft) per minute. The fiber is extruded into an air quench zone of a length of 0.31 meter (1 foot) at ambient temperature. The fiber is passed into a quench bath of water at 4 °C with a residence time of 1.7 seconds. The fiber is taken up and thereafter placed into a bath of water at 90 °C for ten minutes. The fibers are hung vertically and dried by passing air over the fibers at a flow of (30.5 m/min) (100 ft/min) over the fibers for about two hours. The fibers prepared have a size of 140 x 94 µm (OD x ID). The membranes prepared in Examples 1 and 14 are examined by photomicrographs and such membranes have a porous outer surface, a porous inner surface, and have a region which separates oxygen from nitrogen as demonstrated by the separation factors stated.

PERMEABILITY TESTING PROCEDURE

After the fiber is dried, the fibers are tested for permeation properties. The test device is a pressure vessel with four ports, two tubesheet ports, one feed port through which the compressed gas enters the vessel, and an exit or purge port through which the compressed gas can be purged from the vessel. Two hundred ten (210) fibers are passed into one of the tubesheet ports and out the other allowing for a 31.5 cm length of the fibers to be contained within the test device. Epoxy tubesheets are formed in the two tubesheet ports to give a leak-tight bond between the fiber and the two ports. Test units are then pressurized with nitrogen at 0.445 MPa (50 psig) by allowing compressed nitrogen to enter the test device through the feed port while leaving the exit port closed. The exit port is then opened for two minutes to purge the vessel of air and then closed with pure nitrogen left in the vessel. With the exit port closed and the feed port opened, the gas contained within the test device, by means of a pressure driving force, permeates through the walls of the hollow fibers and passes through the lumen of the fibers and out through the tubesheet ports where the flow rate is measured either by means of bubble or mass flow meters. There is negligible back pressure on the gas exiting the tubesheet. After testing with nitrogen the feed gas is changed to oxygen and the vessel is purged for about two minutes to give pure oxygen at 0.445 MPa (50 psig) in the test device. The amount of oxygen permeating through the fiber walls is measured by combining the outputs from the two tubesheet ports. From these flow measurements, the gas permeation rates and separation factor can be calculated by use of the following equations.

$$\text{Nitrogen flux} = \frac{\text{Measured flow (sccm)}}{\text{surface area of fiber (cm}^2\text{) x pressure (cm Hg) x 60 (seconds/minute).}}$$

$$\text{Oxygen flux} = \frac{\text{Measured flow (sccm)}}{\text{surface area of fiber (cm}^2\text{) x pressure (cm Hg) x 60 (seconds/minute).}}$$

The units are scc/cm$^2$ cmHg sec.

Measured flow = standard cubic centimeters / minute.
Surface area of fibers = 3.14 x OD (outside diameter, cm) x length x the number of fibers.
Pressure (cm Hg) = psi x 76 /14.7.

The results are compiled in Table 1.
Separation factor is defined as the Oxygen flux divided by the Nitrogen flux.

TABLE 1

| Example | Oxygen Flux[2] | Oxygen/Nitrogen Separation Factor |
|---|---|---|
| 1 | 4.8 ± .5 | 6.8 ± .1 |
| 2 | 7.4 ± .4 | 6.4 ± .1 |
| 3 | 6.2 ± .1 | 6.4 ± .3 |
| 4 | 7.6 ± .3 | 6.7 ± .1 |
| 5 | 7.0 ± .1 | 5.9 ± .1 |
| 6 | 5.8 ± .2 | 6.8 ± .2 |
| 7 | 9.0 ± .2 | 6.8 ± .2 |
| 8 | 8.3 ± .1 | 6.7 ± .1 |
| 9 | 7.2 ± .1 | 6.0 ± .2 |
| 10[1] | 4.4 ± .4 | 6.0 ± .2 |
| 11 | 6.5 ± .3 | 6.0 ± .5 |
| 12 | 6.1 ± .1 | 6.2 ± .1 |
| 13 | 7.4 ± .1 | 6.5 ± .1 |
| 14 | 8.1 ± .1 | 6.6 ± .2 |
| AVERAGE | 7.0 ± 1.1 | 6.4 ± .3 |

[1] Not included in average, suspect blend composition
[2] Units (1 x $10^{-6}$) scc/cm$^2$•cmHg•sec

Examples 15-36

Hollow fibers are prepared using the standard conditions described hereinbefore using several spin compositions. The hollow fibers prepared are tested for oxygen and nitrogen permeability using the procedure described hereinbefore. The various spin compositions and results are compiled in Table 2. The spin compositions have about 1 to about 6 percent residual methylene chloride therein.

Example 35 is performed using some different conditions than the other examples. During the blend formation stage the blend is heated to 120 °C. The spinnerette temperature is controlled at 70 °C. There is a 23 cm (9 inch) air quench zone. The fiber is passed from the quench bath to a leach bath at ambient temperatures. The fiber is exposed to a further bath of water for 10 minutes at 80 °C. Thereafter the fiber is extracted with a mixture of 50/50 mixture of isooctane and isopropanol for one hour. The fibers are

examined by photomicrograph. The membrane has a dense region on the outer surface and a porous region below the dense region. Therefore the membrane of Example 35 is not an example of the invention.

TABLE 2

| Example | Polymer in Spin Composition wgt % | Solvent to Non-solvent ratio | Oxygen Flux | Separation Factor | Melt Pot Temperature °C |
|---|---|---|---|---|---|
| 15 | 45 | 2.1 | 6±.5 | 3±.4 | 85 |
| 16 | 45 | 2.1 | 2.±1 | 5±.3 | 110 |
| 17 | 45 | 2.5 | 1.7±.1 | 5±.5 | 85 |
| 18 | 45 | 2.3 | 5±.9<br>2±.2 | 2.4<br>4.0 | 110 |
| 19 | 52 | 2.1 | 8±1 | 6.5±.3 | 98 |
| 20 | 52 | 2.0 | 10±1 | 6.5±.3 | 98 |
| 21 | 44 | 1.9 | 4.2±.2 | 3.5±.2 | 80 |
| 22 | 44 | 2.1 | 4±.2 | 3.9±.3 | 80 |
| 23 | 44 | 2.3 | 2±.2 | 3.8±.1 | 80 |
| 24 | 50 | 2.1 | 7±.1 | 5.5±.1 | 92 |
| 25 | 54 | 2.1 | 7.3±.1 | 6±.1 | 92 |
| 26 | 51 | 1.9 | 5.4±.2 | 5.3±.2 | 95 |
| 27 | 51 | 2.1 | 7±.4 | 5.8±.2 | 95 |
| 28 | 53 | 2.1 | 3.6±.3 | 6.3±.4 | 95 |
| 29 | 53 | 1.9 | 2.8±.4 | 5.5±.1 | 95 |
| 30 | 53 | 1.9 | 4.8±.2 | 6.7±.1 | 95 |
| 31 | 52 | 1.9 | 9.7±.4 | 4.3±.5 | 95 |
| 32 | 52 | 2.0 | 9.8±.1 | 6.2±.2 | 95 |
| 33 | 52 | 2.05 | 9.1±.3 | 6.1±.1 | 95 |
| 34 | 52 | 2.3 | * | * | * |
| 35 | 50 | NMP only | .021 | 6.4 | 105 |
| 36 | 52 | 25 | 0.2±.05 | *** | *** |

* Fiber did not phase separate

*** Not measurable, flow rates less than 0.05

Examples 37-40

Hollow fibers are prepared from spin compositions containing polymers of two different molecular weights than the molecular weights of the polymer used to set the standard conditions in Examples 1-14. The polymer content of the spin composition and the solvent to non-solvent ratio is described in Table 3. The results are contained in Table 3.

TABLE 3

| Use of Various Polymers with Different Molecular Weights | | | | | | |
|---|---|---|---|---|---|---|
| Example | $M_w$[1] | % Polymer | S/NS[2] | Flux | Separation Factor | Melt Pot Temperature |
| 37 | 125,000 | 52 | 2.1 | 6.1 | 2.8 | 80 |
| 38 | 191,000 | 52 | 2.10 | 9.5 | 4.0 | 95 |
| 39 | 191,000 | 52 | 2.13 | 9.4 | 6.8 | 95 |
| 40 | 191,000 | 52 | 2.16 | 7.6 | 6.6 | 98 |
| Standard Conditions | 163,000 | 52 | 2.1 | 7.0 | 6.4 | 95 |

[1]The stated values are rounded to the nearest thousand.
[2]S/NS is the solvent non-solvent ratio.

Examples 41-44

Hollow fibers are prepared using the standard conditions using three different line speeds, and the fibers are tested for oxygen and nitrogen permeability. The size of the quench zones are adjusted to keep the residence times of the fibers in the baths constant. The conditions and the results are compiled in Table 4.

TABLE 4

| FIBER PROPERTIES AS A FUNCTION OF LINE SPEED | | | | |
|---|---|---|---|---|
| Example | Line Speed (Meters/Minute) | Flux | Oxygen/Nitrogen Separation Factor | Fiber Size (Microns) |
| 41 | 15.3[1] | 5.13±.28 | 5.44±.28 | 140 x 94 |
| 42 | 30.5[1] | 7.02±.1 | 5.85±.10 | 140 x 94 |
| 43 | 30.50[2] | 5.79±.18 | 6.80±.20 | 140 x 94 |
| 44 | 45.8[2] | 5.59±.10 | 7.21±.20 | 140 x 94 |

[1]Fibers in Examples 41-42 are prepared from the same melt pot run.
[2]Fibers in Examples 43-44 are prepared from the same melt pot run.

Examples 45-60

Several hollow fibers are prepared using the standard conditions with the exception that different fiber sizes are prepared. The fibers are tested for oxygen and nitrogen permeabilities. The results are compiled in Table 5.

TABLE 5

| FIBER PROPERTIES AS A FUNCTION OF FIBER SIZE | | | |
|---|---|---|---|
| Example | Fiber Size (Microns) | $O_2$ Flux | Separation Factor |
| 45* | 204 x 140 | 0.5 ± .08 | 6.4 ± .4 |
| 46 | 140 x 94 | 3.4 ± .21 | 5.3 ± .5 |
| 47 | 158 x 106 | 3.8 ± .5 | 6.7 ± .1 |
| 48 | 140 x 94 | 4.8 ± .5 | 6.8 ± .1 |
| 49 | 112 x 74** | 6.8 | 6.1 |
| 50 | 140 x 94 | 8.3 ± .1 | 6.7 ± .05 |
| 51 | 125 x 85 | 7.9 ± .1 | 6.5 ± .2 |
| 52 | 140 x 94 | 4.4 ± .4 | 6.0 ± .2 |
| 53 | 112 x 74 | 7.5 ± .1 | 5.6 ± 0.5 |
| 54 | 140 x 94 | 7.3 ± .3 | 5.8 ± .1 |
| 55 | 112 x 74 | 10.8 ± 1.0 | 5.3 ± .9 |
| 56 | 140 x 94 | 7.4 ± .1 | 6.5 ± .1 |
| 57 | 112 x 74** | 11 | 5.2 |
| 58 | 106 x 64 | 8.8 ± .3 | 5.3 ± .3 |
| 59 | 103 x 68 | 10.9 ± 1.3 | 3.7 ± 1.1 |
| 60 | 110 x 74 | 10.0 ± .8 | 4.0 ± 1.3 |

*The fiber is solvent dried with a 50/50 mix isooctane-isopropyl alcohol prior to testing

** Result of only one out of four samples

Examples 45-46 are generated from the same melt pot run. Examples 47-49 are generated from the same melt pot run. Examples 50-51 are generated from the same melt pot run. Examples 52-53 are generated from the same melt pot run. Examples 54-55 are generated from the same melt pot run. Examples 56-60 are generated from the same melt pot run.

The fiber size has a significant effect on the permeability characteristics of the hollow fibers. In general, the smaller the fiber the higher the intrinsic permeation rate of oxygen, while the separation factor is fairly insensitive to fiber size.

Examples 61-68

Several hollow fibers are prepared using the standard conditions described hereinbefore, with the exception that the residence time and the temperature of the quench bath is altered. The fibers are tested for oxygen and nitrogen permeability. The results are compiled in Table 6.

TABLE 6

| FIBER PROPERTIES AS A FUNCTION OF QUENCH BATH CONDITIONS | | | | |
|---|---|---|---|---|
| Example | Residence Time (Seconds) | Temperature °C | Flux | Separation Factor |
| 61 | 1.7 | 5°C | 8.1±.1 | 6.0±.2 |
| 62 | 1.7 | 22°C | 5.4±.2 | 6.1±.5 |
| 63 | 1.7 | 5°C | 7.0±.1 | 5.9±.1 |
| 64 | 0.6 | 5°C | 7.1±.3 | 5.4±.1 |
| 65 | 1.7 | 5°C | 9.0±.2 | 6.8±.2 |
| 66 | 0.6 | 5°C | 8.4±.2 | 6.9±.2 |
| 67* | 1.7 | 2°C | 7.8±.1 | 6.1±.1 |
| 68* | 1.7 | 6°C | 6.1±.3 | 6.0±.1 |

* Fiber size held at 140 x 94 µm

Examples 61 and 62, 63 and 64, 65 and 66, and 67 and 68, respectively, are from the same melt pot runs.

The residence time in the first liquid quench bath, from 1.7 to .6 seconds, has little effect on the ultimate performance of the fiber. Temperature has an effect on the fibers gas permeation properties. As the temperature is raised from 5 to 22°C, the oxygen permeability is lowered. The selectivity of the fiber appears to be unaffected by this temperature change.

Examples 69-88

Several hollow fibers are prepared using the procedure described hereinbefore, with the exception that some of the hollow fibers are processed through a third bath of water placed between the first and second baths. The third bath is held at a temperature of about 20°C and the residence time is about two minutes. The fibers are tested for oxygen and nitrogen permeability. The results are compiled in Table 7. The total residence time of the fiber in the baths is the same whether two or three baths are used.

TABLE 7

| GAS PROPERTIES OF FIBERS PROCESSED WITH AND WITHOUT A THIRD LIQUID BATH | | | | | |
|---|---|---|---|---|---|
| Example | Percent Polymer | Third Bath | Flux | Separation Factor | Fiber Size (Microns) |
| 69 | 53 | Yes | 4.6 ±1 | 7.0±.2 | 140 x 94 |
| 70 | 52 | No | 4.8 ±5 | 6.8±.1 | 140 x 94 |
| 71 | 52 | Yes | 4.0 ±3 | 6.7±.1 | 158 x 106 |
| 72 | 52 | No | 3.8±.5 | 6.7±.1 | 158 x 106 |
| 73 | 52 | Yes | 6.9.±4 | 5.2±7. | 112 x 74 |
| 74 | 52 | No | 6.8 | 6.1 | 112 x 74 |
| 75 | 50 | Yes | 6.9±.1 | 5.5±.1 | 140 x 94 |
| 76 | 50 | No | 7.3±.6 | 5.1±.2 | 140 x 94 |
| 77 | 50 | Yes | 4.6±.2 | 5.5±.2 | 158 x 106 |
| 78 | 50 | No | 5.1±.5 | 5.0±.2 | 158 x 106 |
| 79 | 50 | Yes | 12.5±.5 | 3.4±.2 | 112 x 74 |
| 80 | 50 | No | 14.0 | 3.5 | 112 x 74 |
| 81 | 54 | Yes | 5.1±.1 | 5.8±.2 | 140 x 94 |
| 82 | 54 | No | 7.3±.1 | 6.0±.1 | 140 x 94 |
| 83 | 54 | Yes | 2.3±.1 | 5.4±.1 | 158 x 106 |
| 84 | 54 | No | 4.2±.4 | 5.8±.1 | 158 x 106 |
| 85 | 54 | Yes | 20.2±3 | 1.4±.1 | 112 x 74 |
| 86 | 54 | No | 23.3±2 | 1.4±.1 | 112 x 74 |
| 87 | 52 | Yes | 4.8±.7 | 6.5±.1 | 140 x 94 |
| 88 | 52 | No | 7.4±.4 | 6.4±.1 | 140 x 94 |

The presence of a third liquid bath demonstrates its greatest effect in Examples 81-86 where the polymer weight percentage is about 54. This is exhibited primarily in the oxygen permeation rate, with little affect on the separation factor. Examples 69-74, 75-80, 81-86, and 87-88, respectively, are prepared from the same melt pot run.

Example 89

A hollow fiber is prepared using the standard procedure with the addition of the third liquid bath, and the fibers are analyzed for residual solvent, and non-solvent after each bath. The temperature and residence in the third bath is about the same as the third bath in Examples 69 to 88. The total residence time of the fiber in the three baths is the same where two baths are used. The results are compiled in Table 8.

TABLE 8

| PLASTICIZER CONTENT OF FIBER AT VARIOUS STAGES OF PROCESSING | | | |
|---|---|---|---|
| STAGE | PERCENT NMP | PERCENT TEG | PERCENT METHYLENE CHLORIDE |
| Pre-extrusion | 32.5 | 15.6 | 3.0 |
| After first bath | 15.7 | 7.5 | 0 |
| After second bath | 5.0 | 0 | 0 |
| After third bath | 0.7 | 0 | 0 |
| Note: Half of the solvent and non-solvent are removed in the air quench zone and first liquid quench (the bath temperature is 4.5 °C, and the residence time is 1.7 seconds). The fiber size is 140 x 94 microns. | | | |

Examples 90-105

Several hollow fibers are prepared using the standard conditions described hereinbefore, with the exceptions that the residence time and temperature of the second liquid bath are altered.

TABLE 9

| FIBER PROPERTIES AS A FUNCTION OF SECOND LIQUID BATH CONDITIONS | | | | | |
|---|---|---|---|---|---|
| Example | Temperature °C | Time (Minutes) | Percent Residual Solvent and Non-solvent | Flux | Separation Factor |
| 90 | 90 | 10 | <1 | 3.1±.1 | 6.6±.2 |
| 91 | 90 | ½ | 0 | 4.9±.4 | 6.4±.1 |
| 92 | 90 | 1 | 0 | 5.0±.3 | 6.4±.3 |
| 93 | 90 | 5 | 0 | 7.0±.2 | 6.5±.1 |
| 94 | 90 | 10 | 0 | 7.4±.4 | 6.4±.1 |
| 95 | 90 | 10 | 0 | 5.8±.2 | 6.8±.2 |
| 96 | 70 | 1 | 0 | 3.9±.4 | 7.0±.1 |
| 97 | 70 | 5 | 0 | 4.4±.1 | 7.3±.2 |
| 98 | 70 | 10 | 0 | 5.0±.2 | 6.8±.1 |
| 99 | 90 | 10 | 0 | 9.0±.2 | 6.8±.2 |
| 100 | 90 | 10 | *3 | 6.3±.2 | 7.0±.3 |
| 101 | 70 | 10 | 0 | 7.1±.1 | 7.0±.2 |
| 102 | 70 | 10 | *3 | 4.2±.2 | 7.3±.2 |
| 103 | 90 | 10 | 0 | 7.3±.3 | 5.8±.1 |
| 104 | 90 | 10 | *1 | 6.5±.3 | 5.9±.5 |
| 105 | 90 | 10 | *2 | 5.7±.2 | 6.3±.1 |

* Liquid bath has the described solvent percentages added thereto.

Examples 91-94, 95-98, 99-102, and 103-105, respectively, are prepared from the same melt pot run.

The gas permeability is affected by the conditions of the second liquid bath. Higher temperature and residence time result in higher gas permeability. Higher solvent content in the bath result in lowering the gas permeability significantly while the separation factor rises slightly.

Examples 106-111

Several hollow fiber membranes are prepared wherein the time period between the first bath and the second bath is varied. The fibers are tested for oxygen and nitrogen permeability. The results are compiled in Table 10. The membrane of Example 106 is examined by photomicrograph and the membrane exhibits a porous outer and a porous inner surface.

TABLE 10

| FIBER PROPERTIES RESULTING FROM DELAY BETWEEN THE TWO BATHS | | | | |
|---|---|---|---|---|
| Example | Time Between Baths (Minutes) | $O_2$ Flux | Selectivity | Fiber Size (Microns) |
| 106 | 0 | 8.1 ± .1 | 6.0 ± .2 | 140 x 94 |
| 107 | 30 | 7.6 ± .3 | 6.7 ±. 05 | 140 x 94 |
| 108 | 0 | 7.5 ± .1 | 5.6 ± .1 | 125 x 85 |
| 109 | 15 | 7.0 ± .1 | 6.1 ± .1 | 125 x 85 |
| 110 | 45 | 8.0 ± .3 | 6.7 ± .2 | 125 x 85 |
| 111 | 60 | 7.5 ± .1 | 6.0 ± .3 | 125 x 85 |

Examples 106-107 and 108-111, respectively, are from the same melt pot run.

Examples 106-111 demonstrate the fibers experience no deleterious effects due to longer times between the baths. In fact, the use of such a delay may be beneficial.

Examples 112-114

Two spin runs are performed wherein the fibers are dried right after removal from the second liquid bath. A third spin run is performed wherein the fibers are stored in water for 20 hours between the second bath and the drying step. The fibers are tested for oxygen and nitrogen permeability. The results are compiled in Table 11.

TABLE 11

| EFFECT OF DELAY IN DRYING AFTER SECOND BATH | | | | |
|---|---|---|---|---|
| Example | Water Storage Time (Hours) | Percent Solvent (In Second Bath) | Flux | Separation Factor |
| 112 | 0 | 0 | 5.1 ±.2 | 6.3 ±.3 |
| 113 | 0 | 2 | 1.3 ±.1 | 6.1 ±.1 |
| 114 | 20* | 0 | 7.3 ±.3 | 5.8 ±.1 |

Examples 115-124

Several hollow fibers are prepared with differing amounts of residual N-methylpyrrolidone (NMP) in the final fibers. The fibers are tested for oxygen and nitrogen permeability. The membrane of Example 115 is examined by photomicrograph and the membrane exhibits a porous outer and a porous inner surface. The results are compiled in Table 12.

TABLE 12

| EFFECT OF RESIDUAL SOLVENT IN THE FIBERS ON PERMEATION | | | | |
|---|---|---|---|---|
| Example | Percent NMP | $O_2$ Flux | Selectivity | Fiber Size (Microns) |
| 115 | 0.76 | 7.0 ± .3 | 5.8 ± .4 | 140 x 94 |
| 116 | 3.70 | 1.0 ± .4 | 6.3 ± .4 | 204 x 147 |
| 117 | 1.06 | 3.9 ±. 4 | 6.7 ± .1 | 158 x 106 |
| 118 | 0.41 | 4.7 ± .4 | 6.9 ± .1 | 140 x 94 |
| 119 | 0.35 | 6.9 ± .4 | 5.6 ± .4 | 112 x 74 |
| 120 | 1.80 | 4.9 ± .4 | 6.4 ± .4 | 140 x 94 |
| 121 | 1.54 | 5.0 ± .3 | 6.4 ± .3 | 140 x 94 |
| 122 | 1.20 | 7.01 ± .2 | 6.5 ± .1 | 140 x 94 |
| 123 | 1.03 | 7.4 ± .4 | 6.4 ± .1 | 140 x 94 |
| 124* | 1.14 | 4.8 ± .7 | 6.5 ± .1 | 140 x 94 |

* A third liquid bath at 20 °C is used with a residence time of two minutes.

The solvent content of the fiber prepared by the process correlates well with the intrinsic gas permeation rates of the fiber. As the residual solvent in the fiber increases, the permeation rate decreases.

Examples 125

Tetrabromobisphenol A polycarbonate is tested for solubility in several solvents and non-solvents. Weighed amounts of polymer and liquid are placed in 4 dram-capacity glass vials with polyethylene-lined caps. About 2.5 grams of liquid is usually used. Initial polymer concentration is about 5 weight percent. The vials are placed on mechanical rollers for at least 24 hours or until complete solution is affected. Additional polymer, if indicated, is added to prepare concentrations of about 10, 25, and 50 weight percent. Insoluble mixtures with liquid boiling points in excess of about 100 °C are placed in a 100 °C forced-air oven for at least 24 hours' observation or until solution is completed. The polymer is arbitrarily designated as being "insoluble" in the liquid if 5 weight percent or less dissolved; "moderately" soluble if 5-25 percent dissolved; and "soluble" if more than 25 percent dissolved. The results are compiled in Table 13.

TABLE 13
SOLUBILITY OF TETRABROMOBISPHENOL A IN VARIOUS SOLVENTS

| Compound | Relative Solubility* |
| --- | --- |
| poly(dimethyl-siloxane) 50 cs. | I<0.8% b f |
| perfluoro(methyl-cyclohexane) | I<1.4% b |
| hexane | I<1.6% b |
| triethylamine | I<4.7% b |
| butyl stearate | I<4.9% b f |
| methylcyclohexane | I<4.6% b f |
| dioctyl phthalate | I<4.7% b f |
| dodecane | I<4.7% b f |
| isopropylcyclo-hexane | I<4.95% b f |
| t-butylcyclohexane | I<4.9% b f |
| hexadecane | I<4.8% b f |
| diisopropyl ketone | I<4.9% b f |
| cyclohexane | I<4.8% b |
| bis(2-methoxyethyl ether) | S>50.3% b |
| ethyl benzoate | S>25.1<50.1%bcg@f |
| diethylene glycol dibutyl ether | I<4.9% b f |
| triethyl orthoformate | I<4.5% b f |
| methyl isobutyl ketone | I<4.7% b f c |
| tricresyl phosphate | I<5.0% b >5.0% f |

TABLE 13 (Continued)

| Compound | Relative Solubility |
|---|---|
| methyl myristate | I<4.9% b f |
| triethylene glycol dimethylether | S>50.4% b |
| n-octyl acetate | S>50.1% b |
| dicyclohexyl | I<4.8% b f |
| methyl laurate | I<4.7% b f |
| tetraethylene glycol dimethylether | S>50.3% b |
| carbon tetrachloride | I<4.7% b |
| n-propylbenzene | I<4.9% b f c |
| methyl stearate | I<4.7% e f |
| piperidine | S>26.3% b f d |
| xylene | I<5.5% bc>5.5% f |
| decahydronaphthalene (cis & trans) | I<4.4% b f |
| ethylbenzene | I<4.9% b f c |
| diethyl ketone | S>50.2% b |
| toluene | I<4.5% b f c |
| N-ethylmorpholine | S>50.1% b |
| cyclohexyl acetate | S>50.5% b |
| butyraldehyde | I<4.8% b |
| tetrahydrofuran | S>51.4% b |
| ethyl acetate | I<4.7% b c |

TABLE 13 (Continued)

| Compound | Relative Solubility |
|---|---|
| isophorone | S>25.3<50.1b>50.1f |
| cyclohexylbenzene | I<4.8% b f |
| trichloroethylene | S>50.2% b c |
| diacetone alcohol | I<4.9% b f |
| 1,2,4-trichloro-benzene | S>25.4<50.1bc?>50f |
| perchloroethylene | I<4.9% b f |
| chloroform | S>50.8% b c |
| methyl ethyl ketone | S>50.1% b c? |
| styrene | I<4.7% b c |
| ethyl formate | I<5.0% b c |
| benzaldehyde | S>50.1% b f |
| tetrahydro-naphthalene | I<4.8% b f |
| chlorobenzene | S>50.4% b c g@f |
| methyl acetate | I<4.8% b c |
| methylene chloride | S>51.1% b c |
| acetone | I<4.6% b c |
| cyclohexanone | S>50.3% b |
| 1-cyclohexyl-2-pyrrolidinone | I<4.7% b >4.7% f |
| nitrobenzene | S>50.3% b c? g@f |
| p-dioxane | S>50.1% b |
| o-dichlorobenzene | S>50.1% b c g@f |
| epsilon-caprolactone | S>25.3<50.1b>50.1f |

TABLE 13 (Continued)

| Compound | Relative Solubility |
|---|---|
| phenyl ether | S>50.1% e f c?@b |
| methyl formate | I<5.0% b |
| methyl iodide | S>50.2 b |
| cyclopentanone | S>50.3 b |
| hexamethyl-phosphoramide | I<4.9% b >4.9% f |
| methyl benzoate | S>50.5% b f c?@b |
| styrene oxide | S>50.5% b f c?@b&f |
| 1-ethyl-2-pyrrolidinone | S>50.1% b |
| acetophenone | S>50.1% b |
| methyl salicylate | S>25.6%<50.1b>50.1f |
| 1,1,3,3-tetramethylurea | S>50.3 b c g@f |
| 1-bromonaphthalene | S>25.3<50.0%bfc? |
| 1-hexanol | I<4.7% b f |
| dimethyl phthalate | I<4.9% b >4.9% f |
| pyridine | S>50.1% b |
| N,N-dimethyl-acetamide | S>50.2% b |
| propionitrile | I<4.9% b c |
| triethyl phosphate | I<4.8%bc?d?>4.8% f |

* I = Insoluble: <=5%; M= Moderately Soluble: 5-25%; S = soluble: >25; b = at room temperature;

TABLE 13 (Continued)

| Compound | Relative Solubility |
|---|---|
| dimethyl malonate | I<4.8% b f |
| polyethylene glycol E400 | I<2.2% b f |
| 1-acetyl-piperidine | S>50.1% b |
| 2-furaldehyde | S>50.1% b |
| N-methyl-pyrrolidinone | S>50.2% b |
| 1-benzyl-2-pyrrolidone | S>25.9<50.1b>50.1f |
| 2-propanol | I<2.9% b |
| 1-formyl-piperidine | S>50.1% b |
| diiodomethane | S>25.2% b f |
| acetonitrile | I<4.9% b |
| dimethyl-sulfoxide | M=>14.1% b f c |
| N,N-dimethyl-formamide | S>55.0% b |
| gamma-butyrolactone | S>50.2% b |
| ethanol | I<3.9% b |
| nitromethane | I<5.0% b f |
| N-formyl-morpholine | S>25.6<50.2b>50.2f |
| sulfolane | I<4.6% e >4.6% f |
| methanol | I<1.5% b |

c = insoluble fraction and/or solvated polymer and/or

TABLE 13 (Continued)

| Compound | Relative Solubility |
|---|---|
| N-methyl-acetamide | I<4.6% e f |
| 2-pyrrolidinone | S>25.8<50.1b>50.1f |
| diethyl ether | I<4.6% b |
| ethylene glycol diethyl ether | I≤5.3 b c |
| ethylene glycol dimethyl ether | S>51.0% b |
| ethylene carbonate | I<5.0% e f |
| malonitrile | I<4.9% e f |
| N-methyl formamide | I<5.0% b f |

solvent-induced order; d = reacts with polymer; e = at 50°C; f = at 100°C; g = clear.

The behavior of about 27 compounds are marked by a "c". Such behavior includes (a) partial dissolution followed by opacification and whitening of the clear swollen polymer accompanied by cessation of further dissolution; this behavior is frequently accompanied by a hazy or cloudy supernatant liquid; (b) dissolution to give a clear solution followed by precipitation at the same temperature of white and opaque solid, mushy gel-like formation, or, at the extreme, a solidification to a "candle wax-like" solid; and (c) dissolution at elevated temperature followed by precipitation of solid, "gelation", and/or a hazy-cloudy formation in the supernatant liquid upon cooling. Seven particularly severe cases of this behavior are noted. Methylene chloride solutions containing about 51% polymer become hard candle wax-like solids after about 17 days' standing at room temperature. DMSO solutions containing about 14 percent polymer are readily formed at room temperature; they change to a white opaque slush after about 36 hours. Redissolution does not occur at elevated temperature. Chloroform solutions containing about 51% polymer are clear at room temperature but changed into candle wax-like solids after about 14 days. Chlorobenzene solutions containing about 50% polymer become clear stiff gels after about 11 days at room temperature. The gels become clear at 100 °C but become cloudy when cooled. Tetramethylurea containing about 50% polymer is clear and soluble at room temperature but becomes a rigid gel after about 8 days. The gel becomes clear at 100 °C; the clear solution becomes cloudy when cooled to room temperature. A clear solution of about 50% polymer in ethyl benzoate becomes a rigid, opaque gel after 11 days at room temperature. n-Propylbenzene dissolved less than 4.9% polymer at room temperature; solubility is almost complete at 100 °C. The warm solution becomes a candle-like solid when cooled to room temperature.

Table 13 indicates several solvents and non-solvents which are good for solvent non-solvent pairs useful for spinning polycarbonate membranes by the process disclosed herein.

Examples 126-129

Fibers are prepared using the same conditions as described in Example 1, with the exception that a polyethylene glycol with a molecular weight of 400 is used as the non-solvent, and the solvent non-solvent ratio is adjusted. Fibers are produced with a porous inner surface and a porous outer surface. After the fibers are prepared, the fibers are immersed in a solution of 25 percent by volume of methanol in water for

two hours. The fibers are tested as described in Example 1 both before and after the immersion in the methanol and water solution, and the results are compiled in Table 14.

Table 14

| Use of Polyethylene Glycol as a Non-solvent | | | | | |
|---|---|---|---|---|---|
| Example | Solvent Non-solvent Ratio | Oxygen Flux | Separation Factor | Oxygen Flux After Immersion | Separation Factor Immersion |
| 126 | 2.10 | 4.0 | 7.2 | 7.5 | 7.3 |
| 127 | 1.95 | 5.5 | 7.1 | 10.0 | 7.4 |
| 128 | 1.80 | 5.9 | 7.5 | | |
| 129 | 1.60 | 7.1 | 2.4 | | |

Examples 130-145

Fibers are prepared using the same conditions as described in Example 1, with the exception that different nonsolvents are used, and the solvent non-solvent ratio is varied. Fibers are produced with a porous inner surface and a porous outer surface. After the fibers are prepared, the fibers prepared in Examples 135, 141, 143, and 145 are immersed in a solution of 25 percent by volume of methanol in water for two hours. The fibers are tested as described in Example 1 and the results are compiled in Table 15. Those examples where the fibers are immersed in a methanol solution are tested after the immersion in the methanol solution. Membranes of Examples 133 to 135 are examined by photomicrograph and the membranes exhibit porous outer surfaces and porous inner surfaces.

Table 15

| Use of Varied Nonsolvents | | | | | |
|---|---|---|---|---|---|
| Example | Non-solvent | Solvent Non-solvent Ratio | Oxygen Flux | Separation Factor | Fiber Size, µm |
| 130 | polyethylene glycol 1450 | 1.8 | 3.31 ± .15 | 3.42 ± .32 | 140x90 |
| 131 | polyethylene glycol 1450 | 1.8 | 2.45 | 5.45 | 162x104 |
| 132 | ethylene glycol | 3.1 | 9.3 | 1.04 | 140x90 |
| 133 | ethylene glycol | 3.5 | .35 ± .08 | 7.8 ± 1.6 | 140x90 |
| 134 | ethylene glycol | 3.5 | .10 ± .01 | 5.1 ± 0.1 | 204x140 |
| 135 | ethylene glycol | 3.5 | 1.5 ± .1 | 6.7 ± 0.1 | 140x90 |
| 136 | ethylene glycol | 4.5 | 0.04 | 5.8 | 140x90 |
| 137 | ethylene carbonate | 1.5 | 0.074 | >7 | 140x90 |
| 138 | ethylene carbonate | 1.5 | 0.104 | 8.3 | 161x104 |
| 139 | ethylene carbonate | 1.5 | 0.10 | 6.7 | 125x80 |
| 140 | ethylene carbonate | 1.1 | 0.08 | >6 | 140x90 |
| 141 | ethylene carbonate | 1.1 | 0.16 | 8.7 | 140x90 |
| 142 | ethylene carbonate | 1.1 | 0.05 | >6 | 161x104 |
| 143 | ethylene carbonate | 1.1 | 0.17 | >6 | 161x104 |
| 144 | ethylene carbonate | 1.1 | 0.68 | 6.15 | 110x74 |
| 145 | ethylene carbonate | 1.1 | 20 ± 10 | 1.0 | 110x74 |
| Polyethylene glycol 1450 is a polyethylene glycol with a molecular weight of about 1450. | | | | | |

Examples 146-148

Three membranes are prepared using the conditions described in Examples 1-14, and the resultant membranes are examined by photomicrograph. All of the membranes exhibit a porous outer surface and a porous inner surface. The membranes are tested for permeability properties, the results are compiled in

Table 16.

Table 16

| Example | Oxygen Flux | Separation Factor |
|---|---|---|
| 146 | 5.5 ± .2 | 6.6 ± .2 |
| 147 | 8.0 ± .1 | 6.0 ± .2 |
| 148 | 9.0 ± .3 | 6.8 ± .2 |

All of the membranes prepared examined by photomicrograph demonstrate a porous outer surface and a porous inner surface, except the one example noted. It is believed that all of the other membranes prepared have a similar structure. Examination of the fibers by the naked eye during fiber spinning indicates that all of the fibers not examined by photomicrograph look like those examined by photomicrograph.

**Claims**

**1.** A semi-permeable membrane which comprises a polymeric matrix with two porous surfaces and an interior dense region characterized in that the interior dense region has a structure suitable for separating one or more gases from one or more other gases.

**2.** The membrane of Claim 1 wherein the polymeric matrix comprises a polyimide, polycarbonate, polyester, polyestercarbonate, polysulphone, polyethersulphone, polyamide, polyphenylene oxide, or polyolefin.

**3.** The membrane of Claim 1 wherein the polymeric matrix comprises a polycarbonate derived from a bisphenol wherein at least 25 percent of the bisphenol moieties in the backbone of the polymer are tetrahalogenated wherein the halogen is chlorine or bromine.

**4.** The membrane of Claim 1 which comprises a a polymeric matrix in hollow fiber form wherein the inner surface and the outer surface of the hollow fiber are porous and the hollow fiber membrane is capable of separating one or more gases from one or more other gases.

**5.** The membrane of Claim 4 which separates oxygen from nitrogen.

**6.** The membrane of Claim 5 wherein the separation factor for oxygen and nitrogen is 6.1 or greater.

**7.** The membrane of Claim 6 which exhibits a flux of $3.0 \times 10^{-6}$ scc/cm$^2$ cmHg sec. or greater.

**8.** A process for preparing a semi-permeable membrane with two porous surfaces, said membrane capable of separating gases, characterised in that the process comprises:

(A) forming a mixture which comprises a film forming polymer which is capable of forming a membrane, a solvent for the polymer, and a non-solvent for the polymer, wherein said mixture has sufficient viscosity at extrusion temperatures to retain a desired membrane shape;

(B) heating the mixture to a temperature at which the mixture forms a homogeneous fluid and is extrudable;

(C) extruding the mixture into the desired membrane shape; and,

(D) passing the formed membrane through one or more quench zones wherein the mixture phase separates, and the major portion of the solvent and non-solvent are removed from the formed membrane, where at least one of the quench zones comprises a liquid which has low solubility in the polymer; where in the membrane formed has two porous surfaces with a discriminating region capable of separating oxygen from nitrogen.

**9.** The process of Claim 8 wherein the mixture is heated prior to extrusion to 50 to 200 °C and the mixture is extruded at temperature of 50 to 200 °C.

**10.** The process of Claim 8, wherein said mixture comprises:

(i) a bisphenol polycarbonate wherein at least 25 percent by weight of the bisphenol moieties are tetrahalogenated wherein the halogen is chlorine or bromine;
(ii) a solvent for the polycarbonate which comprises a glycol ether of the formula $R^3O\text{-}(CH_2CH_2O)_r\text{-}R^3$ wherein $R^3$ is methyl or ethyl, and r is an integer of between about 1 and 20; a dialkyl ketone wherein the alkyl groups independently are methyl or ethyl; morpholine substituted on the nitrogen atom with an alkyl, formyl or alkanoyl moiety; pyrrolidinone or N-$C_{1-4}$ alkyl, N-$C_{5-6}$ cycloalkyl, or N-$C_{6-10}$ aryl or alkaryl substituted pyrrolidinone; $C_{1-4}$ alkoxycarbonyl, formyl, nitro, or halo substituted benzene; tetrahydrofuran; dimethyl formamide; cyclohexanone; N,N-dimethyl acetamide; acetophenone; methylene chloride; sulfolane; cyclohexyl acetate; 1,1,3,3-tetramethylurea; isophorone; caprolactone; 1-formylpiperidine; methyl salicylate; hexamethylphosphoramide; phenyl ether; or bromonaphthalene; and,
(iii) a non-solvent for the polycarbonate which comprises a glycol or glycol ether which corresponds to the formula $R^4O\text{-}(CH_2CH_2O)_q\text{-}R^4$ wherein $R^4$ is independently in each occurrence hydrogen or $C_{1-4}$ alkyl, and q is an integer of 1 to 250; an ester corresponding to the formula $R^5COOR^6$ wherein $R^5$ is hydrogen or $C_{1-19}$ alkyl, and $R^6$ is $C_{1-10}$ alkyl; a $C_{1-10}$ alkanol; cyclohexane, unsubstituted or substituted with an alkyl, cycloalkyl, or perfluoroalkyl moiety; a $C_{5-20}$ alkane; a dialkyl ketone wherein at least one of the alkyl moieties is $C_3$ or greater; an amide corresponding to the formula $R^7CONHR^8$ wherein $R^7$ is hydrogen or $C_{1-10}$ alkyl and $R^8$ is $C_{1-10}$ alkyl; an acetyl or $C_{1-10}$ alkyl nitrile; acetone; a $C_{1-10}$ alkyl aldehyde; a trialkyl amine; nitromethane; trialkyl orthoformate; diacetone alcohol; dimethyl malonate; decahydronaphthalene; tetra-hydronaphthalene; malononitrile; dicyclo-hexyl; ethylene carbonate; sulfolane; alkyl or cycloalkyl substituted benzene; or water.

**11.** The process of Claim 10 wherein the mixture comprises 40 to 60 percent by weight of polycarbonate and 40 to 60 percent by weight of solvent and non-solvent wherein the ratio of solvent to non-solvent is 1.7 to 5.1.

**12.** The process of Claim 10 wherein the polycarbonate corresponds to the formula

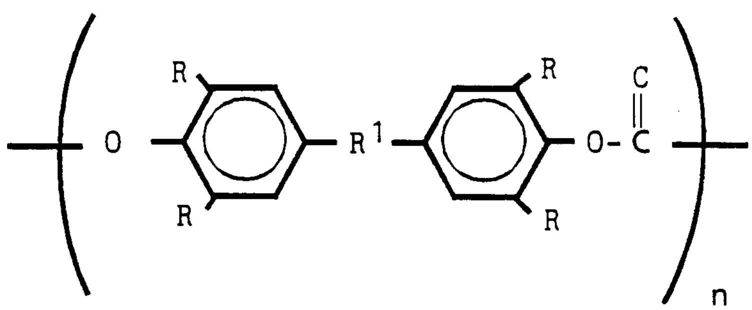 Formula I

wherein R at each occurrence is independently H, Cl, Br, or $C_1$-$C_4$ alkyl; and,
$R^1$ is carbonyl, -S-, $-SO_2-$, -O-, or a $C_1$-$C_6$ divalent hydrocarbon, a $C_1$-$C_6$ divalent halocarbon radical, or an inertly substituted $C_1$-$C_6$ hydrocarbon radical, with the proviso that at least 25 weight percent of the moieties derived from the bisphenol of Formula I present in the discriminating layer bear R groups which are exclusively Br or Cl.

**13.** The process of Claim 8 wherein the mixture is passed from the extruder into an air quench zone, under conditions such that a portion of the solvent is removed from the mixture, and from the air quench zone the mixture is passed into one or more liquid quench zones under conditions such that phase separation is completed and the solvent and non-solvent are removed from the mixture in said liquid quench zones.

**14.** The process of Claim 13 wherein the mixture is passed through two liquid quench zones wherein the mixture is passed through the first liquid zone under conditions such that the mixture undergoes significant phase separation in said bath, and the membrane is passed through the second liquid bath under conditions such that the solvent and non-solvent are substantially removed from the mixture and phase separation is substantially completed.

15. The process of Claim 13 wherein the liquid quench zones comprise lower alcohols, water, fluorocarbons, lower aliphatic hydrocarbons, or mixtures thereof.

16. The process of Claim 8 wherein the membrane shape is a hollow tube, a sheet, or a hollow fiber.

17. The process of Claim 16 wherein said membrane shape is a hollow fiber and the fiber is passed from the extruder into an air quench zone, under conditions such that a portion of the solvent is removed from the fibers and the fiber undergoes draw down in said air quench zone, and from the air quench zone the fiber is passed into one or more liquid quench zones under conditions such that the fiber substantially completes phase separation and the solvent and non-solvent are substantially removed from the fiber in said liquid quench zones.

18. The process of Claim 17 wherein the fiber is contacted with the first liquid quench zone which comprises water at a temperature of 0 to 30 °C and the second liquid quench zone which comprises water at a temperature of 70 to 100 °C.

19. The process of Claim 17 wherein the residence time of the fiber in the air quench zone is 0.25 to 1 second, in the first liquid quench zone is 0.1 to 600 seconds, and in the second liquid quench zone is 1 to 30 minutes.

20. The process of Claim 18 wherein the fiber after removal from the second liquid quench zone contains less than 1.5 percent by weight of solvent and non-solvent.

21. The process of Claim 10 wherein 100 weight percent of the bisphenol moieties present are tetrahalosubstituted with chloro or bromo groups.

22. The process of Claim 21 wherein at least 50 weight percent of the bisphenol moieties present are tetrabromosubstituted.

23. The process of Claim 22 wherein the bisphenol is tetrabromobisphenol A.

24. The process of Claim 10 wherein the solvent is N-methyl pyrrolidone, ethylene glycol dimethyl ether, tetrahydrofuran, diethylene glycol dimethyl ether, acetophenone, methylene chloride, lor cyclohexanone; and the non-solvent is water, diisopropyl ketone, tetraethylene glycol dimethyl ether, diethylene glycol dibutyl ether, hexadecane, diethylene glycol, triethylene glycol, polyethylene glycol with a molecular weight of up to 1450, 2-ethoxyethanol, carbon tetrachloride, or dodecane.

25. The process of Claim 10 wherein the solvent non-solvent pair is N-methyl pyrrolidone and triethylene glycol, N-methyl pyrrolidone and polyethylene glycol with a molecular weight of up to about 1450, ethylene glycol dimethyl ether and water, tetrahydrofuran and water, ethylene glycol dimethyl ether and diisopropyl ketone, tetrahydrofuran and diisopropyl ketone, diethylene glycol dimethyl ether and water, diethylene glycol dimethyl ether and tetraethylene glycol dimethyl ether, acetophenone and diethylene glycol dibutyl ether, methylene chloride and carbon tetrachloride, or acetophenone and hexadecane.

26. The process of Claim 25 wherein the solvent non-solvent pair is N-methyl pyrrolidone and triethylene glycol, or N-methyl pyrrolidone and polyethylene glycol with a molecular weight of up to 400.

27. A hollow fiber membrane comprising tetrabromobisphenol A polycarbonate characterised in that the membrane is prepared by the process comprising:

(A) forming a mixture comprising tetrabromobisphenol A polycarbonate, N-methyl pyrrolidone, and triethylene glycol, wherein the mixture has a sufficient viscosity to allow extrusion at temperatures at which the mixture is homogeneous;

(B) heating the mixture to a temperature at which the mixture forms a homogeneous fluid and is extrudable;

(C) extruding the heated mixture into a hollow fiber form;

(D) passing the formed fiber through an air quench zone wherein the fiber undergoes partial removal of the solvent and the fiber is drawn down, while a core fluid is passed down the hollow core of the fiber under conditions sufficient to prevent the fiber from collapsing;

(E) passing the fiber into a first water quench zone at a temperature at which the polycarbonate undergoes substantial phase separation and the major portion of the N-methyl pyrrolidone and triethylene glycol are removed from the formed fiber; and

(F) passing the fiber into a second water quench zone wherein the second water zone is at a temperature at which a majority of the remaining N-methyl pyrrolidone and triethylene glycol is removed and phase separation is substantially completed;

and further characterized in that the fiber formed has a discriminating region capable of separating oxygen from nitrogen at a separation factor of 6.0 or greater and a flux of 3.0 (1 x $10^{-6}$) scc/$cm^2$ cmHg sec or greater.

**28.** The fiber of Claim 27 wherein the mixture comprises:

(A) 40 to 60 percent by weight of tetrabromobisphenol A polycarbonate; and

(B) 40 to 60 percent by weight of N-methylpyrrolidone and triethylene glycol.

**29.** The fiber of Claim 28 wherein the mixture is heated prior to extrusion to a temperature of 90 to 130 ° C, and is extruded at a temperature of 70 to 130 ° C, the fiber is contacted with the first water quench zone at a temperature of 0 to 30 ° C, and the fiber is contacted with the second water quench zone at a temperature of 80 to 90 ° C.

**30.** The fiber of Claim 29 wherein the residence time of the fiber in the air quench zone is 0.25 to 1.0 second, the residence time of the fiber in the first water quench zone is 0.1 to 300 seconds, and the residence time of the fiber in the second water quench zone is 5 to 10 minutes.

**31.** A composition useful for preparing a semi-permeable membrane characterized by a tetrahalogenated bisphenol polycarbonate which comprises:

(A) a bisphenol polycarbonate wherein at least 25 percent by weight of the bisphenol moieties are tetrahalogenated wherein the halogen is chlorine or bromine;

(B) a solvent for the polycarbonate which comprises a glycol ether which corresponds to the formula $R^3O\text{-}(CH_2CH_2O)_r\text{-}R^3$ wherein $R^3$ is methyl or ethyl, and r is an integer of between about 1 and 20; a dialkyl ketone wherein the alkyl groups independently are methyl or ethyl; morpholine substituted on the nitrogen atom with an alkyl, formyl or alkanoyl moiety; an unsubstituted or N-$C_{1-4}$alkyl, N-$C_{5-6}$ cycloalkyl, or N-$C_{6-10}$ aryl or alkaryl substituted pyrrolidinone; $C_{1-4}$ alkoxycarbonyl, formyl, nitro, or halo substituted benzene; tetrahydrofuran; dimethylformamide, cyclohexanone; N,N-dimethyl acetamide; acetophenone; methylene chloride; or sulfolane; cyclohexyl acetate; 1,1,3,3-tetramethylurea; isophorone; caprolactone; 1-formylpiperidine; methyl salicylate; hexamethylphosphoramide; phenyl ether; or bromonaphthalene; and,

(C) a non-solvent for the polycarbonate which comprises a glycol or glycol ether which corresponds to the formula $R^4O\text{-}(CH_2CH_2O)_q\text{-}R^4$ wherein $R^4$ is separately in each occurrence hydrogen or $C_{1-4}$ alkyl, and q is an integer of 1 to 250; an ester corresponding to the formula $R^5COOR^6$ wherein $R^5$ is hydrogen or $C_{1-19}$ alkyl, and $R^6$ is $C_{1-10}$ alkyl; a $C_{1-10}$ alkanol; cyclohexane, unsubstituted or substituted with an alkyl, cycloalkyl, or perfluoroalkyl moiety; a $C_{5-20}$ alkane; a dialkyl ketone wherein at least one of the alkyl moieties is $C_3$ or greater; an amide corresponding to the formula $R^7CONHR^8$ wherein $R^7$ is hydrogen or $C_{1-10}$ alkyl and $R^8$ is $C_{1-10}$ alkyl; an acetyl or $C_{1-10}$ alkyl nitrile; acetone; a $C_{1-10}$ alkyl aldehyde; a trialkyl amine; nitromethane; trialkyl orthoformate; diacetone alcohol; dimethyl malonate; decahydronaphthalene; tetrahydronaphthalene; malononitrile; dicyclohexyl; ethylene carbonate; sulfolane; alkyl or cycloalkyl substituted benzene; or water.

**32.** The composition of Claim 31 wherein the mixture has a sufficient viscosity to allow extrusion at temperatures at which the mixture is homogeneous.

**33.** The composition of Claim 32 wherein the polycarbonate corresponds to the formula

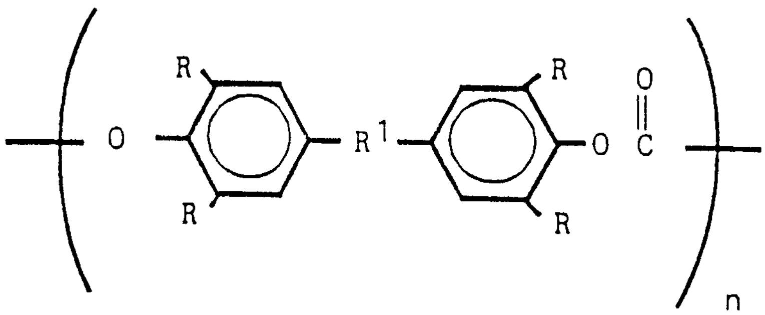

Formula I

wherein R at each occurrence is independently H, Cl, Br, or $C_1$-$C_4$ alkyl; and, $R^1$ is carbonyl, -S-, -$SO_2$-, -O-, or a $C_1$-$C_6$ divalent hydrocarbon, a $C_1$-$C_6$ divalent halocarbon radical, or an inertly substituted $C_1$-$C_6$ hydrocarbon radical, with the proviso that at least 25 weight percent of the bisphenol moieties present in the discriminating layer bear R groups which are exclusively Br or Cl.

**34.** The composition of Claim 33 wherein the remainder of the R groups are hydrogen or $C_{1-4}$ alkyl, and $R^1$ is a $C_{1-6}$ divalent hydrocarbon.

**35.** The composition of Claim 34 wherein the remainder of the R groups are hydrogen or methyl and $R^1$ is a $C_{1-6}$ alkylidine moiety.

**36.** The composition of Claim 35 wherein at least 50 weight percent of the bisphenol moieties present in the discriminating layer bear R groups which are exclusively Br or Cl.

**37.** The composition of Claim 36 wherein 100 weight percent of the bisphenol moieties bear R groups which are exclusively bromine.

**38.** The composition of Claim 37 wherein the bisphenol is tetrabromobisphenol A.

**39.** The composition of Claim 31 wherein the mixture comprises 30 to 60 percent by weight of polycarbonate and 40 to 70 percent by weight of solvent and non-solvent wherein the ratio of solvent to non-solvent is 0.9 to 5.1.

**40.** The composition of Claim 31 wherein

(A) the solvent for the polycarbonate comprises N-methyl pyrrolidinone, tetrahydrofuran, ethylene glycol dimethyl ether, diethyl ketone, N-ethyl morpholine, dimethyl formamide, cyclohexanone, bis (2-methoxyethyl ether), N,N-dimethyl acetamide, acetophenone, methylene chloride, sulfolane, or mixtures thereof; and,

(B) the non-solvent for the polycarbonate comprises triethylene glycol, 2-ethoxyethanol, diethylene glycol dibutyl ether, polyethylene glycols with molecular weights of up to about 1450, diethylene glycol, dodecane, hexadecane, cyclohexane, methylcyclohexane, perchloroethylene, diisopropyl ketone, isopropyl ketone, isopropyl cyclohexane, t-butyl cyclohexane, N-methyl formamide, decaline, N-methyl acetamide, tetralin, dicyclohexyl, cyclohexyl benzene, carbon tetrachloride, water, or mixtures thereof.

**41.** The composition of Claim 40 wherein the solvent non-solvent pair is N-methyl pyrrolidone and triethylene glycol, N-methyl pyrrolidone and a polyethylene glycol with molecular weight of up to 1450, ethylene glycol dimethyl ether and water, tetrahydrofuran and water, ethylene glycol dimethyl ether and diisopropyl ketone, tetrahydrofuran and diisopropyl ketone, diethylene glycol dimethyl ether and water, acetophenone and diethylene glycol dibutyl ether, methylene chloride and carbon tetrachloride, or acetophenone and hexadecane.

**42.** The composition of Claim 31 which further comprises a solubilizing agent.

**43.** The composition of Claim 42 wherein the solubilizing agent comprises methylene chloride, tetrahydrofuran, methyl ethyl ketone, methyl iodide, or chloroform.

**44.** The membrane of Claim 4 wherein the inner surface of the hollow fiber membrane exhibits noncontinuous porosity and functions to separate one or more gases from one or more other gases.

**Patentansprüche**

**1.** Semipermeable Membran, welche eine polymere Matrix mit zwei porösen Oberflächen und einem inneren dichten Bereich umfaßt, dadurch gekennzeichnet, daß der innere dichte Bereich eine zur Trennung von einem oder mehreren Gasen von einem oder mehreren anderen Gasen geeignete Struktur besitzt.

**2.** Membran nach Anspruch 1, worin die polymere Matrix ein Polyimid, Polycarbonat, einen Polyester, ein Polyestercarbonat, Polysulfon, Polyethersulfon, Polyamid, Polyphenylenoxid oder Polyolefin umfaßt.

**3.** Membran nach Anspruch 1, worin die polymere Matrix ein von einem Bisphenol A abstammendes Polycarbonat umfaßt, worin wenigstens 25 % der Bisphenol A-Einheiten in dem Rückgrat des Polymeren tetrahalogeniert sind, wobei das Halogen Chlor oder Brom ist.

**4.** Membran nach Anspruch 1, welche eine polymere Matrix in Hohlfaserform umfaßt, worin die innere Oberfläche und die äußere Oberfläche porös sind und die Hohlfasermembran fähig ist, ein oder mehrere Gase von einem oder mehreren anderen Gasen zu trennen.

**5.** Membran nach Anspruch 4, welche Sauerstoff von Stickstoff trennt.

**6.** Membran nach Anspruch 5, worin der Trennfaktor für Sauerstoff und Stickstoff 6,1 oder größer ist.

**7.** Membran nach Anspruch 6, welche einen Fluß von 3,0 x $10^{-6}$ ssc/$cm^2$ cmHg sec oder größer aufweist.

**8.** Verfahren zur Herstellung einer semipermeablen Membran mit zwei porösen Oberflächen, wobei diese Membran zur Trennung von Gasen fähig ist, dadurch gekennzeichnet, daß das Verfahren umfaßt:
(A) Bildung einer Mischung, die ein filmbildendes, zur Bildung einer Membran fähiges Polymeres, ein Lösungsmittel für das Polymere und ein Nichtlösungsmittel für das Polymere umfaßt, worin diese Mischung ausreichende Viskosität bei Extrusionstemperaturen hat, um eine gewünschte Membrangestalt beizubehalten;
(B) Erhitzen der Mischung auf eine Temperatur, bei welcher die Mischung ein homogenes Fluid bildet und extrudierbar ist;
(C) Extrudieren der Mischung in die gewünschte Membranform; und
(D) Führen der geformten Membran durch eine oder mehrere Abschreckzonen, worin die Mischung Phasentrennung erfährt und der größere Teil des Lösungsmittels und des Nichtlösungsmittels aus der geformten Membran entfernt werden, wobei wenigstens eine der Abschreckzonen eine Flüssigkeit umfaßt, die niedrige Löslichkeit in dem Polymeren hat; worin die geformte Membran zwei poröse Oberflächen mit einem diskriminierenden, die Trennung von Sauerstoff von Stickstoff fähigen Bereich besitzt.

**9.** Verfahren nach Anspruch 8, worin die Mischung vor dem Extrudieren auf 50 bis 200 ° C erhitzt wird und die Mischung bei einer Temperatur von 50 bis 200 ° C extrudiert wird.

**10.** Verfahren nach Anspruch 8, worin diese Mischung umfaßt:
(i) ein Bisphenolpolycarbonat, worin wenigstens 25 Gew.-% der Bisphenoleinheiten tetrahalogeniert sind, wobei das Halogen Chlor oder Brom ist;
(ii) ein Lösungsmittel für das Polycarbonat, welches einen Glykolether der Formel $R^3O-(CH_2CH_2O)_r-R^3$, worin $R^3$ Methyl oder Ethyl ist und r eine ganze Zahl von zwischen 1 und 20 ist; ein Dialkylketon, worin die Alkylgruppen unabhängig voneinander Methyl oder Ethyl sind; Morpholin, substituiert am Stickstoffatom mit einer Alkyl-, Formyl- oder Alkanoyleinheit; Pyrrolidinon oder N-$C_{1-4}$-alkyl-, N-$C_{5-6}$-cycloalkyl- oder N-$C_{6-10}$-aryl- oder -aralkyl-substituiertes Pyrrolidinon; $C_{1-4}$-alkoxycarbonyl, formyl-, nitro- oder halogen-substituiertes Benzol; Tetrahydrofuran; Dimethylformamid; Cyclohexanon, N,N-Dimethylacetamid, Acetophenon; Methylenchlorid; Sulfolan; Cyclohexylacetat; 1,1,3,3-Tetramethylharnstoff; Isophoron; Caprolacton; 1-Formylpiperidin; Methylsalicylat; Hexamethylphosphoramid; Phenylether oder Bromnaphthalin umfaßt; und

(iii) ein Nichtlösungsmittel für das Polycarbonat, welches umfaßt: ein Glykol oder einen Glykolether, welcher der Formel $R^4O\text{-}(CH_2CH_2O)_q\text{-}R^4$, worin R4 unabhängig von jedem Vorkommen Wasserstoff oder $C_{1-4}$-Alkyl ist und q eine ganze Zahl von 1 bis 250 ist, entspricht; einen der Formel $R^5COOR^6$, worin $R^5$ Wasserstoff oder $C_{1-19}$-Alkyl ist und $R^6$ $C_{1-10}$-Alkyl ist, entsprechenden Ester; ein $C_{1-10}$-Alkanol; Cyclohexan, unsubstituiert oder substituiert mit einer Alkyl-, Cycloalkyl- oder Perfluoralkyleinheit; ein $C_{5-20}$-Alkan; ein Dialkylketon, worin wenigstens eine der Alkyleinheiten $C_3$ oder größer ist; ein der Formel $R^7CONHR^8$, worin $R^7$ Wasserstoff oder $C_{1-10}$-Alkyl ist und $R^8$ $C_{1-10}$-Alkyl ist, entsprechendes Amid; ein Acetyl- oder $C_{1-10}$-Alkylnitril; Aceton; einen $C_{1-10}$-Alkylaldehyd; ein Trialkylamin; Nitromethan; Trialkylorthoformiat; Diacetonalkohol; Dimethylmalonat; Decahydronaphthalin; Tetrahydronaphthalin; Malononitril; Dicyclohexyl; Ethylencarbonat; Sulfolan; alkyl- oder cycloalkyl-substituiertes Benzol oder Wasser.

**11.** Verfahren nach Anspruch 10, worin die Mischung 40 bis 60 Gew.-% Polycarbonat und 40 bis 60 Gew.-% Lösungsmittel und Nichtlösungsmittel, worin das Verhältnis von Lösungsmittel zu Nichtlösungsmittel 1,7 bis 5,1 ist, umfaßt.

**12.** Verfahren nach Anspruch 10, worin das Polycarbonat der Formel entspricht:

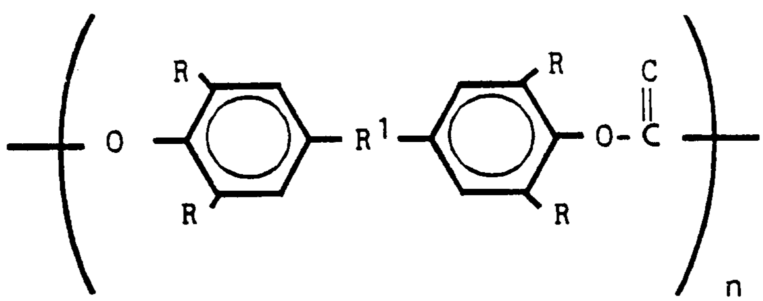
Formel I

worin R bei jedem Vorkommen unabhängig H, Cl, Br oder $C_{1-4}$-Alkyl ist; und $R^1$ Carbonyl, -S-, $-SO_2-$, -O- oder ein zweiwertiger $C_1$-$C_6$-Kohlenwasserstoffrest, ein zweiwertiger $C_1$-$C_6$-Halogenkohlenstoffrest oder ein inert substituierter $C_1$-$C_6$- Kohlenwasserstoffrest ist, mit der Maßgabe, daß wenigstens 25 Gew.-% der von dem in der diskriminierenden Schicht vorkommenden Bisphenol der Formel I abstammenden Einheiten R-Gruppen tragen, welche ausschließlich Br oder Cl sind.

**13.** Verfahren nach Anspruch 8, worin die Mischung aus dem Extruder in eine Luftabschreckzone unter solchen Bedingungen geführt wird, daß ein Teil des Lösungsmittels aus der Mischung entfernt wird, und die Mischung aus der Luftabschreckzone in eine oder mehrere Flüssigkeitsabschreckzonen unter solchen Bedingungen geführt wird, daß Phasentrennung abgeschlossen wird und das Lösungsmittel und Nichtlösungsmittel aus der Mischung in diesen Flüssigkeitsabschreckzonen entfernt werden.

**14.** Verfahren nach Anspruch 13, worin die Mischung durch zwei Flüssigkeitsabschreckzonen geführt wird, worin die Mischung durch die erste Flüssigkeitszone unter solchen Bedingungen geführt wird, daß die Mischung signifikante Phasentrennung in diesem Bad erfährt, und die Membran durch das zweite Flüssigkeitsbad unter solchen Bedingungen geführt wird, daß das Lösungsmittel und das Nichtlösungsmittel im wesentlichen aus der Mischung entfernt werden und Phasentrennung im wesentlichen abgeschlossen wird.

**15.** Verfahren nach Anspruch 13, worin die Flüssigkeitsabschreckzone niedere Alkohole, Wasser, Fluorkohlenstoffe, niedere aliphatische Kohlenwasserstoffe oder Mischungen hiervon umfaßt.

**16.** Verfahren nach Anspruch 8, worin die Membrangestalt ein Hohlrohr, eine Folie oder eine Hohlfaser ist.

**17.** Verfahren nach Anspruch 16, worin diese Membrangestalt eine Hohlfaser ist und die Faser aus dem Extruder in eine Luftabschreckzone unter solchen Bedingungen geführt wird, daß ein Teil des Lösungsmittels aus den Fasern entfernt wird und die Faser ein Abziehen in dieser Luftabschreckzone erfährt, und die Faser aus der Luftabschreckzone in ein oder mehrere Flüssigkeitsabschreckzonen unter solchen Bedingungen geführt wird, daß die Faser Phasentrennung im wesentlichen abschließt und das Lösungsmittel und Nichtlösungsmittel im wesentlichen aus der Faser in dieser Flüssigkeitsabschreckzone entfernt werden.

**18.** Verfahren nach Anspruch 17, worin die Faser mit der ersten Flüssigkeitsabschreckzone, welche Wasser mit einer Temperatur von 0 bis 30° C umfaßt, und der zweiten Flüssigkeitsabschreckzone, welche Wasser mit einer Temperatur von 70 bis 100° C umfaßt, kontaktiert wird.

**19.** Verfahren nach Anspruch 17, worin die Aufenthaltszeit der Faser in der Luftabschreckzone 0,25 bis 1 sec beträgt, in der ersten Flüssigkeitsabschreckzone 0,1 bis 600 sec beträgt und in der zweiten Flüssigkeitsabschreckzone 1 bis 30 min beträgt.

**20.** Verfahren nach Anspruch 18, worin die Faser nach der Entfernung aus der zweiten Flüssigkeitsabschreckzone weniger als 1,5 Gew.-% Lösungsmittel und Nichtlösungsmittel enthält.

**21.** Verfahren nach Anspruch 10, worin 100 Gew.-% der vorhandenen Bisphenol-Einheiten mit Chlor- oder Bromgruppen tetrahalogensubstituiert sind.

**22.** Verfahren nach Anspruch 21, worin wenigstens 50 Gew.-% der vorhandenen Bisphenol-Einheiten tetrabromsubstituiert sind.

**23.** Verfahren nach Anspruch 22, worin das Bisphenol Tetrabrombisphenol A ist.

**24.** Verfahren nach Anspruch 10, worin das Lösungsmittel N-Methylpyrrolidon, Ethylenglykoldimethylether, Tetrahydrofuran, Diethylenglykoldimethylether, Acetophenon, Methylenchlorid oder Cyclohexanon ist, und das Nichtlösungsmittel Wasser, Diisopropylketon, Tetraethylenglykoldimethylether, Diethylenglykoldibutylether, Hexadecan, Diethylenglykol, Triethylenglykol, Polyethylenglykol mit einem Molekulargewicht bis zu 1450, 2-Ethoxyethanol, Tetrachlorkohlenstoff oder Dodecan ist.

**25.** Verfahren nach Anspruch 10, worin das Paar Lösungsmittel/Nichtlösungsmittel N-Methylpyrrolidon und Triethylenglykol, N-Methylpyrrolidon und Polyethylenglykol mit einem Molekulargewicht bis zu etwa 1450, Ethylenglykoldimethylether und Wasser, Tetrahydrofuran und Wasser, Ethylenglykoldimethylether und Diisopropylketon, Tetrahydrofuran und Diisopropylketon, Diethylenglykoldimethylether und Wasser, Diethylenglykoldimethylether und Tetraethylenglykoldimethylether, Acetophenon und Diethylenglykoldibutylether, Methylenchlorid und Tetrachlorkohlenstoff oder Acetophenon und Hexadecan ist.

**26.** Verfahren nach Anspruch 25, worin das Paar Lösungsmittel/Nichtlösungsmittel N-Methylpyrrolidon und Triethylenglykol oder N-Methylpyrrolidon und Polyethylenglykol mit einem Molekulargewicht bis zu 400 ist.

**27.** Hohlfasermembran, umfassend Tetrabrombisphenol A-polycarbonat, dadurch gekennzeichnet, daß die Membran durch das Verfahren hergestellt ist, welches umfaßt:

(A) Bildung einer Mischung, welche Tetrabrombisphenol A-polycarbonat, N-Methylpyrrolidon und Triethylenglykol umfaßt, wobei die Mischung eine ausreichende Viskosität besitzt, um Extrusion bei Temperaturen, bei denen die Mischung homogen ist, zu ermöglichen;

(B) Erhitzen der Mischung auf eine Temperatur, bei welcher die Mischung ein homogenes Fluid bildet und extrudierbar ist;

(C) Extrudieren der erhitzten Mischung zu einer Hohlfaserform;

(D) Führen der geformten Faser durch eine Luftabschreckzone, worin die Faser partielle Entfernung des Lösungsmittels erfährt und die Faser abgezogen wird, während ein Kernfluid den hohlen Kern der Faser unter ausreichenden Bedingungen, um ein Zusammenfallen der Faser zu vermeiden, herabgeführt wird;

(E) Führen der Faser in eine erste Wasserabschreckzone bei einer Temperatur, bei welcher das Polycarbonat wesentliche Phasentrennung erfährt und der größere Teil des N-Methylpyrrolidons und Triethylenglykols aus der geformten Faser entfernt werden; und

(F) Führen der Faser in eine zweite Wasserabschreckzone, wobei sich die zweite Wasserabschreckzone auf einer Temperatur befindet, bei welcher ein größerer Teil des verbliebenen N-Methylpyrrolidons und Triethylenglykols entfernt wird und Phasentrennung praktisch abgeschlossen wird; und

weiter dadurch gekennzeichnet, daß die geformte Faser einen Trenn-Bereich besitzt, der zur Trennung Sauerstoff von Stickstoff mit einem Trennfaktor von 6,0 oder größer und einem Fluß von 3,0 (1 x $10^{-6}$) scc/$cm^2$ cmHg sec oder größer in der Lage ist.

**28.** Faser nach Anspruch 27, worin die Mischung umfaßt:
(A) 40 bis 60 Gew.-% Tetrabrombisphenol A-polycarbonat; und
(B) 40 bis 60 Gew.-% N-Methylpyrrolidon und Triethylenglykol.

**29.** Faser nach Anspruch 28, worin die Mischung vor der Extrusion auf eine Temperatur von 90 bis 130° C erhitzt wird und bei einer Temperatur von 70 bis 130° C extrudiert wird, die Faser mit der ersten Wasserabschreckzone bei einer Temperatur von 0 bis 30° C in Kontakt gebracht wird und die Faser mit der zweiten Wasserabschreckzone bei einer Temperatur von 80 bis 90° C in Kontakt gebracht wird.

**30.** Faser nach Anspruch 30, worin die Aufenthaltszeit der Faser in der Luftabschreckzone 0,25 bis 1 sec beträgt, die Aufenthaltszeit der Faser in der ersten Wasserabschreckzone 0,1 bis 300 sec beträgt und die Aufenthaltszeit der Faser in der zweiten Wasserabschreckzone 5 bis 10 min beträgt.

**31.** Zur Herstellung einer semipermeablen Membran geeignete Zusammensetzung, gekennzeichnet durch ein tetrahalogeniertes Bisphenolpolycarbonat, welche umfaßt:
(A) ein Bisphenolpolycarbonat, worin wenigstens 25 Gew.-% der Bisphenoleinheiten tetrahalogeniert sind, wobei das Halogen Chlor oder Brom ist;
(B) ein Lösungsmittel für das Polycarbonat, welches einen Glykolether der Formel $R^3O-(CH_2CH_2O)_r-R^3$, worin $R^3$ Methyl oder Ethyl ist und r eine ganze Zahl von zwischen 1 und 20 ist; ein Dialkylketon, worin die Alkylgruppen unabhängig voneinander Methyl oder Ethyl sind; Morpholin, substituiert am Stickstoffatom mit einer Alkyl-, Formyl- oder Alkanoyleinheit; ein unsubstituiertes oder N-$C_{1-4}$-alkyl-, N-$C_{5-6}$-cycloalkyl- oder N-$C_{6-10}$-aryl- oder -aralkyl-substituiertes Pyrrolidinon; $C_{1-4}$-alkoxycarbonyl-, formyl-, nitro- oder halogen-substituiertes Benzol; Tetrahydrofuran; Dimethylformamid; Cyclohexanon, N,N-Dimethylacetamid, Acetophenon; Methylenchlorid; oder Sulfolan; Cyclohexylacetat; 1,1,3,3-Tetramethylharnstoff; Isophoron; Caprolacton; 1-Formylpiperidin; Methylsalicylat; Hexamethylphosphoramid; Phenylether oder Bromnaphthalin umfaßt; und
(C) ein Nichtlösungsmittel für das Polycarbonat, welches umfaßt: ein Glykol oder einen Glykolether, welcher der Formel $R^4O-(CH_2CH_2O)_q-R^4$, worin R4 unabhängig von jedem Vorkommen Wasserstoff oder $C_{1-4}$-Alkyl ist und q eine ganze Zahl von 1 bis 250 ist, entspricht; einen der Formel $R^5COOR^6$, worin $R^5$ Wasserstoff oder $C_{1-19}$-Alkyl ist und $R^6$ $C_{1-10}$-Alkyl ist, entsprechenden Ester; ein $C_{1-10}$-Alkanol; Cyclohexan, unsubstituiert oder substituiert mit einer Alkyl-, Cycloalkyl- oder Perfluoralkyleinheit; ein $C_{5-20}$-Alkan; ein Dialkylketon, worin wenigstens eine der Alkyleinheiten $C_3$ oder größer ist; ein der Formel $R^7CONHR^8$, worin $R^7$ Wasserstoff oder $C_{1-10}$-Alkyl ist und $R^8$ $C_{1-10}$- Alkyl ist, entsprechendes Amid; ein Acetyl- oder $C_{1-10}$-Alkylnitril; Aceton; einen $C_{1-10}$-Alkylaldehyd; ein Trialkylamin; Nitromethan; Trialkylorthoformiat; Diacetonalkohol; Dimethylmalonat; Decahydronaphthalin; Tetrahydronaphthalin; Malononitril; Dicyclohexyl; Ethylencarbonat; Sulfolan; alkyl- oder cycloalkyl-substituiertes Benzol oder Wasser.

**32.** Zusammensetzung nach Anspruch 31, worin die Mischung eine ausreichende Viskosität besitzt, um Extrudieren bei Temperaturen, bei welchen die Mischung homogen ist, zu ermöglichen.

**33.** Zusammensetzung nach Anspruch 32, worin das Polycarbonat der Formel entspricht:

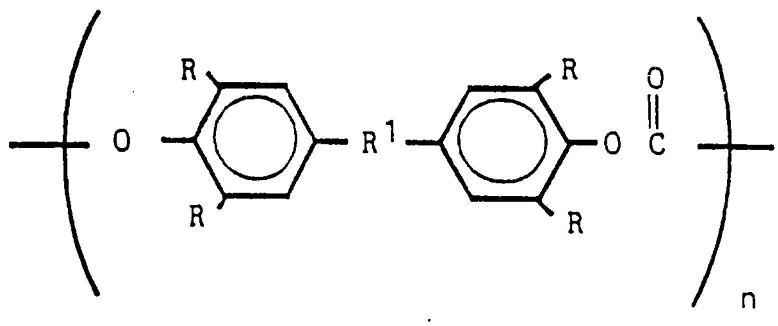

Formel I

worin R bei jedem Vorkommen unabhängig H, Cl, Br oder $C_{1-4}$-Alkyl ist; und $R^1$ Carbonyl, -S-, $-SO_2-$, -O- oder ein zweiwertiger $C_1$-$C_6$-Kohlenwasserstoffrest, ein zweiwertiger $C_1$-$C_6$-Halogenkohlenstoffrest oder ein inert substituierter $C_1$-$C_6$- Kohlenwasserstoffrest ist, mit der Maßgabe, daß wenigstens 25 Gew.-% der in der diskriminierenden Schicht vorkommenden Bisphenoleinheiten R-Gruppen tragen, welche ausschließlich Br oder Cl sind.

**34.** Zusammensetzung nach Anspruch 33, worin der restliche Teil der R-Gruppen Wasserstoff oder $C_{1-4}$-Alky1 sind, und $R^1$ ein zweiwertiger $C_{1-6}$-Kohlenwasserstoff ist.

**35.** Zusammensetzung nach Anspruch 34, worin der restliche Teil der R-Gruppen Wasserstoff oder Methyl sind, und $R^1$ eine $C_{1-6}$-Alkylidineinheit ist.

**36.** Zusammensetzung nach Anspruch 35, worin wenigstens 50 Gew.-% der in der diskriminierenden Schicht vorhandenen Bisphenoleinheiten R-Gruppen tragen, welche ausschließlich Cl oder Br sind.

**37.** Zusammensetzung nach Anspruch 36, worin 100 Gew.-% der Bisphenoleinheiten R-Gruppen tragen, welche ausschließlich Brom sind.

**38.** Zusammensetzung nach Anspruch 37, worin das Bisphenol Tetrabrombisphenol A ist.

**39.** Zusammensetzung nach Anspruch 31, worin die Mischung 30 bis 60 Gew.-% Polycarbonat und 40 bis 70 Gew.-% an Lösungsmittel und Nichtlösungsmittel, wobei das Verhältnis von Lösungsmittel zu Nichtlösungsmittel 0,9 bis 5,1 ist, umfaßt.

**40.** Zusammensetzung nach Anspruch 31, worin

(A) das Lösungsmittel für das Polycarbonat N-Methylpyrrolidon, Tetrahydrofuran, Ethylenglykoldimethylether, Diethylketon, N-Ethylmorpholin, Dimethylformamid, Cyclohexanon, Bis-(2-methoxyethylether), N,N-Dimethylacetamid, Acetophenon, Methylenchlorid, Sulfolan oder Mischungen hiervon umfaßt; und

(B) das Nichtlösungsmittel für das Polycarbonat Triethylenglykol, 2-Ethoxyethanol, Diethylenglykoldibutylether, Polyethylenglykole mit Molekulargewichten bis zu etwa 1450, Diethylenglykol, Dodecan, Hexadecan, Cyclohexan, Methylcyclohexan, Perchlorethylen, Diisopropylketon, Isopropylketon, Isopropylcyclohexan, t-Butylcyclohexan, N-Methylformamid, Decalin, N-Methylacetamid, Tetralin, Dicyclohexyl, Cyclohexylbenzol, Tetrachlorkohlenstoff, Wasser oder Mischungen hiervon umfaßt.

**41.** Zusammensetzung nach Anspruch 40, worin das Paar Lösungsmittel/Nichtlösungsmittel N-Methylpyrrolidon und Triethylenglykol, N-Methylpyrrolidon und Polyethylenglykol mit Molekulargewicht bis zu 1450, Ethylenglykoldimethylether und Wasser, Tetrahydrofuran und Wasser, Ethylenglykoldimethylether und Diisopropylketon, Tetrahydrofuran und Diisopropylketon, Diethylenglykoldimethylether und Wasser, Acetophenon und Diethylenglykoldibutylether, Methylenchlorid und Tetrachlorkohlenstoff oder Acetophenon und Hexadecan ist.

**42.** Zusammensetzung nach Anspruch 31, welche weiter ein solubilisierendes Mittel umfaßt.

**43.** Zusammensetzung nach Anspruch 42, worin das solubilisierende Mittel Methylenchlorid, Tetrahydrofuran, Methylethylketon, Methyljodid oder Chloroform umfaßt.

**44.** Membran nach Anspruch 4, worin die innere Oberfläche der Hohlfasermembran nichtkontinuierliche Porosität aufweist und zur Tennung von einem oder mehreren Gasen von einem oder mehreren anderen Gasen wirkt.

**Revendications**

**1.** Membrane semi-perméable qui comprend une matrice polymère avec deux surfaces poreuses et une région intérieure dense caractérisée en ce que la région intérieure dense possède une structure appropriée pour séparer un ou plusieurs gaz d'un ou plusieurs autres gaz.

**2.** Membrane selon la revendication 1, dans laquelle la matrice polymère comprend un polyimide, un polycarbonate, un polyester, un polyestercarbonate, une polysulfone, une polyéthersulfone, un polyamide, un poly(oxyde de phénylène) ou une polyoléfine.

**3.** Membrane selon la revendication 1, dans laquelle la matrice polymère comprend un polycarbonate dérivé d'un bisphénol dans lequel au moins 25 pourcent des unités bisphénol dans le squelette du polymère sont tétrahalogénées, l'halogène étant le chlore ou le brome.

**4.** Membrane selon la revendication 1, qui comprend une matrice polymère sous forme de fibre creuse dans laquelle la surface interne et la surface externe de la fibre creuse sont poreuses et la membrane de fibre creuse est capable de séparer un ou plusieurs gaz d'un ou plusieurs autres gaz.

**5.** Membrane selon la revendication 4, qui sépare l'oxygène de l'azote.

**6.** Membrane selon la revendication 5, dans laquelle le facteur de séparation pour l'oxygène et l'azote est de 6,1 ou plus.

**7.** Membrane selon la revendication 6, qui présente un débit de 3,0 x $10^{-6}$ scc/cm$^2$.cm/Hg.s ou plus.

**8.** Procédé de préparation d'une membrane semi-perméable avec deux surfaces poreuses, ladite membrane étant capable de séparer des gaz, caractérisé en ce que le procédé comprend les étapes consistant:

(A) à former un mélange qui comprend un polymère filmogène qui est capable de former une membrane, un solvant pour le polymère et un non solvant pour le polymère, ledit mélange possèdant une viscosité suffisante aux températures d'extrusion pour conserver une forme de membrane souhaitée;

(B) à chauffer le mélange à une température à laquelle le mélange forme un fluide homogène et est extrudable;

(C) à extruder le mélange dans la forme de membrane souhaitée; et

(D) à passer la membrane formée à travers une ou plusieurs zones de trempe dans lesquelles les phases du mélange se séparent, et la majeure partie du solvant et du non solvant est éliminée de la membrane formée, au moins une des zones de trempe comprenant un liquide qui possède une faible solubilité dans le polymère, la membrane formée possédant deux surfaces poreuses avec une région discriminatrice capable de séparer l'oxygène de l'azote.

**9.** Membrane selon la revendication 8, dans laquelle le mélange est chauffé avant l'extrusion à une température de 50 à 200 °C et le mélange est extrudé à une température de 50 à 200 °C.

**10.** Procédé selon la revendication 8, dans lequel ledit mélange comprend:

(i) un polycarbonate de bisphénol dans lequel au moins 25 pourcent en poids des unités bisphénol sont tétrahalogénées, l'halogène étant le chlore ou le brome;

(ii) un solvant pour le polycarbonate qui comprend un glycoléther de formule $R^3O-(CH_2CH_2O)_r-R^3$ dans laquelle $R^3$ représente un radical méthyle ou éthyle, et r est un nombre entier compris entre environ 1 et 20; une dialkylcétone dans laquelle les radicaux alkyle sont indépendamment un radical méthyle ou éthyle; une morpholine substituée sur l'atome d'azote par un radical alkyle, formyle ou

alcanoyle; la pyrrolidinone ou une pyrrolidinone substituée sur l'atome d'azote par un radical alkyle en $C_1$ à $C_4$, cycloalkyle en $C_5$ à $c_6$, ou aryle ou alkaryle en $C_6$ à $C_{10}$; un benzène substitué par un radical alkoxycarbonyle en $C_1$ à $C_4$, formyle, nitro ou halogèno; le tétrahydrofuranne; le diméthylformamide, la cyclohexanone; le N,N-diméthylacétamide; l'acétophénone; le chlorure de méthylène; le sulfolane; l'acétate de cyclohexyle; la 1,1,3,3-tétraméthylurée; l'isophorone; la caprolactone; la 1-formylpipéridine; le salycilate de méthyle; l'hexaméthylphosphoramide; le phényléther; ou le bromonaphtalène et,

(iii) un non solvant pour le polycarbonate qui comprend un glycol ou un glycoléther de formule $R^4O-(CH_2CH_2O)_q-R^4$ dans laquelle chaque $R^4$ représente indépendamment un atome d'hydrogène ou un radical alkyle en $C_1$ à $C_4$ et q est un nombre entier de 1 à 250; un ester de formule $R^5COOR^6$ dans laquelle $R^5$ représente un atome d'hydrogène ou un radical alkyle en $C_1$ à $C_{19}$ et $R^6$ représente un radical alkyle en $C_1$ à $C_{10}$; un alcanol en $C_1$ à $C_{10}$; le cylclohexane, non substitué ou substitué par un radical alkyle, cvcloalkyle, ou perfluoroalkyle; un alcane en $C_5$ à $C_{20}$; une dialkylcétone dans laquelle au moins un des radicaux alkyle est en $C_3$ ou plus; un amide de formule $R^7CONHR^8$ dans laquelle $R^7$ représente un atome d'hydrogène ou un radical alkyle en $C_1$ à $C_{10}$ et $R^8$ est un radical alkyle en $C_1$ à $C_{10}$; un acétyle ou un alkyl(en $C_1$ à $C_{10}$)nitrile; l'acétone; un alkyle(en $C_1$ à $C_{10}$)-aldéhyde; une trialkylamine; le nitrométhane; un trialkylorthoformiate; le diacétone alcool; le malonate de diméthyle; le décahydronaphtalène; le tétrahydronaphtalène; le malononitrile; le dicyclohexyle; le carbonate d'éthylène; le sulfolane; un benzène substitué par un alkyle ou un cycloalkyle; ou de l'eau.

**11.** Procédé selon la revendication 10, dans lequel le mélange comprend de 40 à 60 pourcent en poids de polycarbonate et 40 à 60 pourcent en poids de solvant et de non solvant, le rapport de solvant à non solvant étant de 1,7 à 5,1.

**12.** Procédé selon la revendication 10, dans lequel le polycarbonate correspond à la formule

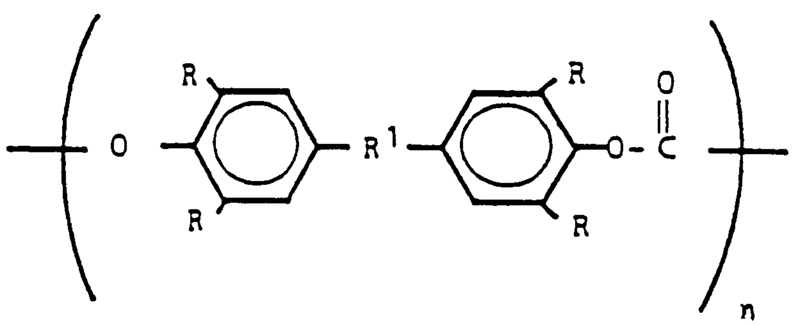 Formule I

dans laquelle chaque R représente indépendamment H, Cl, Br, ou un alkyle en $C_1$ à $C_4$; et

$R^1$ est un groupe carbonyle -S-, $-SO_2$, -O-, ou un hydrocarbure divalent en $C_1$ à $C_6$, un radical halogénocarboné divalent en $C_1$ à $C_6$, ou un groupe hydrocarboné en $C_1$ à $C_6$ substitué de façon inerte, à condition qu'au moins 25 pourcent en poids des unités dérivées du bisphénol de formule I présent dans la couche discriminatrice portent des groupes R qui sont exclusivement Br ou Cl.

**13.** Procédé selon la revendication 8, dans lequel le mélange est passé de l'extrudeuse dans une zone de trempe à l'air, dans des conditions telles qu'une partie du solvant est éliminée du mélange, et, de la zone de trempe à l'air, le mélange est passé dans une ou plusieurs zones de trempe liquides dans des conditions telles que la séparation de phases est achevée et le solvant et le non solvant sont éliminés du mélange dans lesdites zones de trempe liquides.

**14.** Procédé selon la revendication 13, dans lequel le mélange traverse deux zones de trempe liquides, le mélange traversant la première zone liquide dans des conditions telles que le mélange subit une séparation de phase significative dans ledit bain, et la membrane traversant le second bain dans des conditions telles que le solvant et le non solvant sont sensiblement éliminés dudit mélange et la séparation de phases est sensiblement achevée.

15. Procédé selon la revendication 13, dans lequel les zones de trempe liquides comprennent des alcools inférieurs, de l'eau, les fluorocarbonates, les hydrocarbures aliphatiques inférieurs, ou leurs mélanges.

16. Procédé selon la revendication 8, dans lequel la forme de la membrane est un tube creux, une feuille ou une fibre creuse.

17. Procédé selon la revendication 16, dans lequel ladite forme de membrane est une fibre creuse et la fibre traverse l'extrudeuse dans une zone de trempe à l'air, dans des conditions telles qu'une partie du solvant est éliminée des fibres, et la fibre est étirée vers le bas dans ladite zone de trempe à l'air, et, de la zone de trempe à l'air, la fibre est passée dans une ou plusieurs zones de trempe liquides dans des conditions telles que la fibre achève sensiblement une séparation de phases et le solvant et le non solvant sont sensiblement éliminés de la fibre dans lesdites zones de trempe liquides.

18. Procédé selon la revendication 17, dans lequel la fibre est mise en contact avec la première zone de trempe liquide qui comprend de l'eau à une température de 0 à 30 ° C et la deuxième zone de trempe liquide qui comprend de l'eau de 70 à 100 ° C.

19. Procédé selon la revendication 17, dans lequel le temps de séjour de la fibre dans la zone de trempe à l'air est de 0,25 à 1 seconde, dans la première zone de trempe liquide est de 0,1 à 600 secondes, et dans la deuxième zone de trempe liquide est de 1 à 30 minutes.

20. Procédé selon la revendication 18, dans lequel la fibre, après retrait de la deuxième zone de trempe liquide, contient moins de 1,5 pourcent en poids de solvant et de non solvant.

21. Procédé selon la revendication 10, dans lequel 100 pourcent en poids des unités bisphénol présentes sont tétrahalogénées substituées avec des groupes chloro ou bromo.

22. Procédé selon la revendication 21, dans lequel au moins 50 pourcent en poids des unités bisphénol présentes sont tétrabromosubstituées.

23. Procédé selon la revendication 22, dans lequel le bisphénol est le tétrabromobisphénol A.

24. Procédé selon la revendication 10, dans lequel le solvant est la N-méthylpyrrolidinone, l'éthylèneglycoldiméthyléther, le tétrahydrofuranne, le diéthylèneglycoldiméthyléther, l'acétophénone, le chlorure de méthylène, ou la cyclohexanone; et le non solvant est l'eau, la diisopropylcétone, le tétraéthylèneglycoldiméthyléther, le diéthylèneglycoldibutyléther, l'hexadécane, le diéthylèneglycol, le triéthylèneglycol, le polyéthylèneglycol avec une masse moléculaire jusqu'à 1450, le 2-éthoxyéthanol, le tétrachlorure de carbone, ou le dodécane.

25. Procédé selon la revendication 10, dans lequel le couple solvant-non solvant est la N-méthylpyrrolidone et le triéthylèneglycol, la N-méthylpyrrolidone et le polyéthylèneglycol avec une masse moléculaire jusqu'à environ 1450, l'éthylèneglycoldiméthyléther et l'eau, le tétrahydrofuranne et l'eau, l'éthylèneglycoldiméthyléther et la diisopropylcétone, le tétrahydrofuranne et la diisopropylcétone, le diéthylèneglycoldiméthyléther et l'eau, le diéthylèneglycoldiméthyléther et le tétraéthylèneglycoldiméthyléther, l'acétophénone et le diéthylèneglycoldibutyléther, le chlorure de méthylène et le tétrachlorure de carbone, ou l'acétophénone et l'hexadécane.

26. Procédé selon la revendication 25, dans lequel le couple solvant-non solvant est la N-méthylpyrrolidone et le triéthylèneglycol, ou la N-méthylpyrrolidone et le polyéthylèneglycol avec une masse moléculaire jusqu'à 400.

27. Membrane sous forme de libre creuse comprenant un polycarbonate de tétrabromobisphénol A caractérisée en ce que la membrane est préparée selon le procédé comprenant les étapes consistant à :

(A) à former un mélange comprenant un polycarbonate de tétrabromobisphénol A, la N-méthylpyrrolidone, et le triéthylèneglycol, dans lequel le mélange possède une viscosité suffisante pour permettre une extrusion aux températures auxquelles le mélange est homogène;

(B) à chauffer le mélange à une température à laquelle le mélange forme un fluide homogène et qui peut être extrudé;
(C) à extruder le mélange chauffé sous forme de fibre creuse;
(D) à faire passer la fibre formée à travers une zone de trempe à l'air dans laquelle la fibre subit une élimination partielle du solvant, et la fibre est étirée vers le bas, tandis qu'un fluide central est passé vers le bas dans le noyau creux de la fibre dans des conditions suffisantes pour éviter que la fibre ne s'effondre;
(E) à faire passer la fibre dans une première zone de trempe aqueuse à une température à laquelle le polycarbonate subit une séparation de phases importante et la majeur partie de la N-méthylpyrrolidone et du triéthylèneglycol sont éliminées de la fibre formée; et
(F) à faire passer la fibre dans une deuxième zone de trempe aqueuse dans laquelle la deuxième zone aqueuse est à une température à laquelle la majeure partie de la N-méthylpyrrolidone et du triéthylèneglycol restants est éliminée et la séparation de phases est sensiblement achevée;

et caractérisée de plus en ce que la fibre formée possède une région discriminatrice capable de séparer l'oxygène de l'azote avec un facteur de séparation de 6,0 ou plus et un débit de 3,0 (1 x $10^{-6}$) scc/$cm^2$.cmHg.s ou plus.

**28.** Fibre selon la revendication 27, dans laquelle le mélange comprend:
(A) de 40 à 60 pourcent en poids de polycarbonate de tétrabromobisphénol A; et
(B) de 40 à 60 pourcent en poids de N-méthylpyrrolidone et de triéthylèneglycol.

**29.** Fibre selon la revendication 28, dans laquelle le mélange est chauffé avant extrusion à une température de 90 à 130 ° C, et est extrudé à une température de 70 à 130 ° C, la fibre est mise en contact avec la première zone de trempe aqueuse à une température de 0 à 30 ° C et la fibre est mise en contact avec la deuxième zone de trempe aqueuse à une température de 80 à 90 ° C.

**30.** Fibre selon la revendication 29, dans laquelle le temps de séjour de la fibre dans la zone de trempe à l'air est de 0,25 à 1,0 seconde, le temps de séjour de la fibre dans la première zone de trempe aqueuse est de 0,1 à 300 s et le temps de séjour de la fibre dans la deuxième zone de trempe aqueuse est de 5 à 10 min.

**31.** Composition utile pour préparer une membrane semi-perméable, caractérisée par un polycarbonate de bisphénol tétrahalogéné qui comprend:
(A) un polycarbonate de bisphénol dans lequel au moins 25 pourcent en poids des unités bisphénol sont tétrahalogénées, l'halogène étant le chlore ou le brome;
(ii) un solvant pour le polycarbonate qui comprend un glycoléther de formule $R^3O\text{-}(CH_2CH_2O)_r\text{-}R^3$ dans laquelle $R^3$ représente un radical méthyle ou éthyle, et r est un nombre entier compris entre environ 1 et 20; une dialkylecétone dans laquelle les radicaux alkyle représentent indépendamment un radical méthyle ou éthyle; une morpholine substituée sur l'atome d'azote avec un radical alkyle, formyle ou alcanoyle; une pyrrolidinone substituée sur l'atome d'azote avec un radical alkyle en $C_1$ à $C_4$, cycloalkyle en $C_5$ à $C_6$, ou aryle ou alkaryle en $C_6$ à $C_{10}$; un benzène substitué par un radical alkoxycarbonyle en $C_1$ à $C_4$, formyle, nitro ou halogèno; le tétrahydrofuranne; la diméthylformamide; la cyclohexanone; le N,N-diméthylacétamide; l'acétophénone; le chlorure de méthylène; ou le sulfolane; l'acétate de cyclohexyle; la 1,1,3,3-tétraméthylurée; l'isophorone; la caprolactone; la 1-formylpipéridine; le salicylate de méthyle; l'hexaméthylphosphoramide; le phényléther; ou le bromonaphtalène et,
(C) un non solvant pour le polycarbonate qui comprend un glycol ou un glycoléther de formule $R^4O\text{-}(CH_2CH_2O)_q\text{-}R^4$ dans laquelle chaque $R^4$ représente séparément un atome d'hydrogène ou un radical alkyle en $C_1$ à $C_4$, et q est un nombre entier de 1 à environ 250, un ester de formule $R^5COOR^6$ dans laquelle $R^5$ représente un atome d'hydrogène ou un radical alkyle en $C_1$ à $C_{19}$ et $R^6$ représente un radical alkyle en $C_1$ à $C_{10}$; un alcanol en $C_1$ à $C_{10}$; le cylclohexane, substitué ou non substitué avec un radical alkyle, cycloalkyle, ou perfluoroalkyle; un alcane en $C_5$ à $C_{20}$; une dialkylcétone dans laquelle au moins un des radicaux alkyle est en $C_3$ ou plus; un amide de formule $R^7CONHR^8$ dans laquelle $R^7$ représente un atome d'hydrogène ou un radical alkyle en $C_1$ à $C_{10}$ et $R^8$ est un radical alkyle en $C_1$ à $C_{10}$; un acétyle ou un alkyl( $C_1$ - $C_{10}$)nitrile; l'acétone; un alkyl( $C_1$ - $C_{10}$)aldéhyde; une trialkylamine; le nitrométhane; un orthoformiate de trialkyle; le diacétone alcool; le malonate de diméthyle; le décahydronaphtalène; le tétrahydronaphtalène; le malononitrile; le dicyclohexyle; le carbonate d'éthylène; le sulfolane; un benzène substitué par un alkyle ou un cycloalkyle;

ou de l'eau.

**32.** Composition selon la revendication 31, dans laquelle le mélange possède une viscosité suffisante pour permettre l'extrusion à des températures auxquelles le mélange est homogène.

**33.** Composition selon la revendication 32, dans laquelle le polycarbonate correspond à la formule

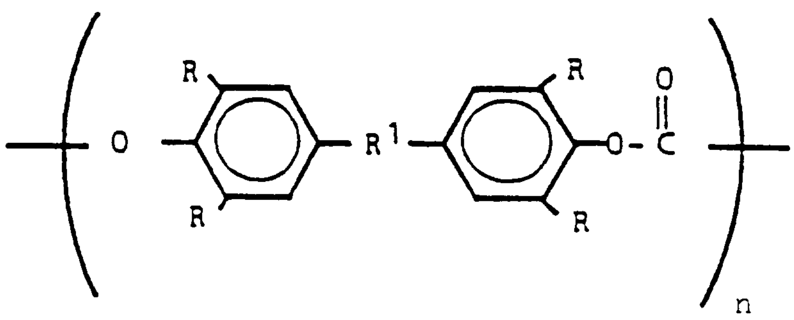

Formule I

dans laquelle chaque R représente indépendamment un atome H, Cl, Br, ou un radical alkyle en $C_1$ à $C_4$; et,

$R^1$ représente un groupe carbonyle -S-, $-SO_2-$, -O-, un radical hydrocrabure divalent en $C_1$ à $C_6$, un groupe halogénocarboné divalent en $C_1$ à $C_6$, ou un groupe hydrocarboné en $C_1$ à $C_6$ substitué de façon inerte, à condition qu'au moins 25 pourcent en poids des unités bisphénol présentes dans la couche discriminatrice portent des groupes R qui sont exclusivement Br ou Cl.

**34.** Composition selon la revendication 33, dans laquelle le restant des radicaux R représente un atome d'hydrogène ou un radical alkyle en $C_1$ à $C_4$, et $R_1$ représente un hydrocarbure en $C_1$ à $C_6$ divalent.

**35.** Composition selon la revendication 34, dans laquelle le restant des radicaux R représente un atome d'hydrogène ou un radical méthyle et $R^1$ représente un groupe alkylidène en $C_1$ à $C_6$.

**36.** Composition selon la revendication 35 dans laquelle au moins 50 pourcent en poids des unités bisphénol présentes dans la couche discriminatrice portent des radicaux R qui sont exclusivement Br ou Cl.

**37.** Composition selon la revendication 36 dans laquelle 100 pourcent en poids des unités bisphénol portent des radicaux R qui sont exclusivement du brome.

**38.** Composition selon la revendication 37 dans laquelle le bisphénol est le tétrabromobisphénol A.

**39.** Composition selon la revendication 31, dans laquelle le mélange comprend 30 à 60 pourcent en poids de polycarbonate et 40 à 70 pourcent en poids de solvant et de non solvant, le rapport du solvant au non solvant étant de 0,9 à 5,1.

**40.** Composition selon la revendication 31, dans laquelle

(A) le solvant pour le polycarbonate comprend la N-méthylpyrrolidinone, le tétrahydrofuranne, l'éthylèneglycoldiméthyléther, la diéthylcétone, la N-éthylmorpholine, le diméthylformamide, la cyclohexanone, le bis(2-méthoxyéthyléther), la N,N-diméthylacétamide, l'acétophénone, le chlorure de méthylène, le sulfonale ou leurs mélanges; et

(B) le non solvant pour le polycarbonate comprend le triéthylèneglycol, le 2-éthoxyéthanol, le diéthylèneglycoldibutyléther, les polyéthylèneglycols avec des masses moléculaires jusqu'à 1450, le diéthylèneglycol, le dodécane, l'hexadécane, le cyclohexane, le méthylcyclohexane, le perchloroéthylène, la diisopropylcétone, l'isopropylcétone, l'isopropylcyclohexane, le t-butylcyclohexane, la N-méthylformamide, la décaline, le N-méthylacétamide, la tétraline, le dicyclohexyle, le cyclohexylbenzène, le tétrachlorure de carbone, l'eau et leurs mélanges.

**41.** Composition selon la revendication 40, dans laquelle le couple solvant-non solvant est la N-méthylpyrrolidone et le triéthylèneglycol, la N-méthylpyrrolidone et un polyéthylèneglycoi avec une masse moléculaire jusqu'à environ 1450, l'éthylèneglycoldiméthyléther et l'eau, le tétrahydrofuranne et l'eau, l'éthylèneglycoldiméthyléther et la diisopropylcétone, le tétrahydrofuranne et la diisopropylcétone, le diéthylèneglycoldiméthyléther et l'eau, l'acétophénone et le diéthylèneglycoldibutyléther, le chlorure de méthylène et le tétrachlorure de carbone, ou l'acétophénone et l'hexadécane.

**42.** Composition selon la revendication 31, qui comprend de plus un agent de solubilisation.

**43.** Composition selon la revendication 42, dans laquelle l'agent de solubilisation comprend le chlorure de méthylène, le tétrahydrofuranne, la méthyléthylcétone, l'iodure de méthyle, ou le chloroforme.

**44.** Membrane selon la revendication 4, dans laquelle la surface interne de la membrane de fibre creuse présente une porosité non continue et fonctionne pour séparer un ou plusieurs gaz d'un ou plusieurs autres gaz.